(19) Europäisches Patentamt

European Patent Office

Office européen des brevets

(11) **EP 0 780 794 B1**

(12) **FASCICULE DE BREVET EUROPEEN**

(45) Date de publication et mention
de la délivrance du brevet:
**05.03.2003 Bulletin 2003/10**

(51) Int Cl.$^7$: **G06T 7/20**

(21) Numéro de dépôt: **96402777.5**

(22) Date de dépôt: **18.12.1996**

(54) **Procédé de correction d'estimation de mouvement dans des images à structures périodiques**

Verfahren zur Korrektur von Bewegungsschätzung in Bildern mit periodischen Strukturen

Motion estimation correction process in images with a periodical structure

(84) Etats contractants désignés:
**DE FR GB IT**

(30) Priorité: **22.12.1995 FR 9515402**

(43) Date de publication de la demande:
**25.06.1997 Bulletin 1997/26**

(73) Titulaire: **THOMSON multimedia**
**92648 Boulogne Cédex (FR)**

(72) Inventeur: **Heimburger, Catherine**
**92050 Paris La Défense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 647 919** **GB-A- 2 277 003**

**Description**

L'invention concerne un procédé de correction d'estimation de mouvement dans des images à structures périodiques. Ce procédé est particulièrement adapté à des systems de conversion d'images comprenant un changement de fréquence trame, notamment de conversion du format 50 Hz entrelacé en un format 75 Hz progressif. L'invention s'applique notamment dans le domaine de la télévision.

La mise en oeuvre d'une estimation de mouvement dans le cadre d'un système de conversion d'images permet d'augmenter sensiblement les performances de ce système. Cependant, la présence de structures périodiques dans une image peut mettre en échec le procédé d'estimation de mouvement, ce qui peut donner lieu un champ de vecteurs très perturbé et ne convenant pas pour interpoler temporellement les trames d'entrée.

Considérons par exemple un zèbre (à rayures verticales) courant de gauche à droite sur une savane uniforme et filmé en gros plan pour recouvrir une pluralité de blocs principaux. Il est alors difficile de déterminer les vecteurs de mouvement corrects de ces blocs principaux. Si l'on désigne les rayures successives du zèbre respectivement par a, b, c... un vecteur correct devrait faire correspondre la rayure a de la première image à la rayure a de l'image suivante, et ainsi de suite pour toutes les rayures. On obtient bien un minimum dans la matrice des erreurs, qui comprend les erreurs correspondant à chacun des vecteurs de mouvement testés.

Cependant, le vecteur faisant correspondre la rayure a de la première image avec la rayure b de la trame 2/3 et la rayure b de la trame 1 avec la rayure c de la trame 2/3 etc... engendre lui aussi un minimum dans la matrice.

Etant donné le bruit de quantification et le bruit inhérent à l'image, l'erreur correspondant au vecteur de mouvement correct peut être supérieure à l'erreur minimale de la matrice courante, cette dernière erreur correspondant donc à un vecteur incorrect. En sélectionnant le vecteur uniquement par le critère de l'erreur minimale, on provoque donc une erreur qui se répercutera et sera visible lors de l'interpolation temporelle des trames d'entrée du procédé, et ceci sur toutes les parties de l'animal en question où cette ambiguité n'aura pas été résolue.

La détection de structures périodiques et la correction de l'estimation qui en résulte ont été abordés dans les deux demandes européennes EP-A-93402507 du 11 octobre 1993 et EP-A-95400721 du 31 mars 1995, déposées toutes les deux au nom de Thomson Consumer Electronics SA.

Dans ces deux demandes, dès qu'un bloc est jugé comme appartenant à une structure périodique, le vecteur de mouvement de ce bloc est déterminé parmi un ensemble de vecteurs candidats. Il s'agira de celui parmi les vecteurs candidats donnant la plus petite erreur. Les vecteurs candidats sont les vecteurs des blocs adjacents, ou une combinaison de ceux-ci.

Or, cette façon de corriger bloc périodique par bloc périodique les vecteurs de mouvement peut introduire des vecteurs différents pour les blocs d'une même structure. Elle peut aussi affecter à ces blocs périodiques un vecteur n'ayant rien à voir avec le mouvement recherché, lorsque le bloc adjacent contient un objet ayant un mouvement différent.

EP-A-0 647 919 révèle un procédé de correction d'estimation de mouvement dans des images comportant des structures périodiques dans un système de détermination de vecteurs de mouvement par comparaison de blocs d'images. Selon ce document on procède bloc par bloc et, si on établit qu'un bloc fait partie d'une structure périodique, le vecteur de mouvement de ce bloc est remplacé par le vecteur du bloc à gauche ou au-dessus, ou bien par une combinaison de tous les deux.

La présente invention concerne un procédé de correction d'estimation de mouvement dans des images comportant des structures périodiques dans un système de détermination de vecteurs de mouvement par comparaison de blocs d'images, une matrice d'erreurs étant associée à chaque bloc, caractérisé en ce qu'il comporte les étapes:

- de détermination des blocs périodiques adjacents,
- de choix d'un vecteur de mouvement unique pour l'ensemble de ces blocs.

Ainsi, la correction des vecteurs de mouvement n'est apportée qu'une fois la structure périodique délimitée. Il y aura une bonne homogénéité du mouvement de cette structure.

Selon un mode de réalisation particulier, l'étape de choix d'un vecteur de mouvement comporte elle-même l'étape de cumul membre à membre des matrices d'erreur des blocs périodiques.

Le cumul des matrices membre à membre permet d'obtenir une matrice pour l'ensemble des blocs, et par conséquent d'avoir des critères de choix d'un vecteur de mouvement par rapport à cet ensemble. La matrice cumulée est équivalente à la matrice que l'on aurait obtenue si l'on avait effectuée l'estimation de mouvement sur un "macrobloc" composé de l'ensemble des blocs périodiques.

Selon un mode de réalisation particulier, l'on considère l'ensemble de blocs périodiques adjacents d'une même ligne de blocs.

On se restreint dans ce cas à des structures périodiques dans une même ligne. Cependant, comme on le verra dans ce qui suit, en tenant compte du vecteur déterminé pour une éventuelle structure périodique de la ligne précédente, cela n'empêche en rien l'obtention d'un champ de vecteurs homogènes au niveau de la zone périodique, lignes confondues.

La limitation à une ligne permet de limiter l'accroissement de la complexité du système et la mémoire nécessaire par rapport à un système d'estimation de mouvement sans correction. En effet, les systèmes conventionnels d'estimation de mouvement procèdent généralement ligne par ligne et bloc par bloc.

Il est bien évident que le procédé inventif s'applique également à des colonnes de blocs. On remplacera les termes tels que au dessus ou en dessous par à gauche et à droite, etc...

Selon un mode de réalisation particulier, l'étape de choix d'un vecteur de mouvement comprend en outre l'étape de détermination d'un ensemble de vecteurs candidats, et de choix en tant que vecteur unique du vecteur candidat donnant le minimum d'erreur dans la matrice cumulée.

Selon un mode de réalisation particulier, l'étape de choix d'un vecteur de mouvement comporte outre l'étape de choix comme vecteur unique d'un des deux vecteurs des blocs à gauche et à droite des blocs périodiques si l'erreur dans la matrice cumulée correspondant à l'un desdits deux vecteurs est un minimum local dans sa ligne.

Selon un mode de réalisation particulier, si aucun desdits deux vecteurs ne remplit la condition précédente, alors le vecteur donnant le miminum d'erreur de la matrice cumulée est choisi en tant que vecteur unique.

Selon un mode de réalisation particulier, le vecteur unique finalement retenu est le vecteur d'un bloc immédiatement supérieur à l'un des blocs périodiques adjacents s'il est lui aussi périodique et si l'erreur associée à ce bloc dans la matrice cumulée est un minimum local dans sa ligne.

Comme mentionné précédemment, cette étape permet de s'affranchir de la limitation à une ligne de blocs.

L'invention a aussi pour objet un procédé de détection de structures périodiques dans un système d'estimation de mouvement à base de blocs d'images comportant l'étape de détermination d'une matrice d'erreurs pour différents vecteurs de mouvement pour un bloc courant, l'étape de détermination de la ligne de la matrice comportant l'erreur minimale de la matrice, de détermination du maximum d'erreur de ladite ligne, ainsi que l'étape de détermination du plus petit minimum secondaire de ladite ligne, une condition de périodicité d'un bloc étant que lesdits deux minimas sont proches en valeur, l'estimation de mouvement de blocs jugés périodiques étant corrigée par le procédé mentionné ci-dessus,

ledit procédé de détection étant caractérisé en ce qu'il comprend les étapes:

de détermination du plus grand maximum secondaire de ladite ligne,
d'évaluation du niveau de bruit de l'image,
de mise en oeuvre de la condition supplémentaire pour déterminer la périodicité d'un bloc:
la différence entre au moins un des minima et le maximum secondaire doit être significative par rapport au niveau de bruit de l'image.

La mise en oeuvre du maximum secondaire pour détecter une structure périodique permet d'éviter d'une part la détection inopportune de structures périodiques dans des zones uniformes bruitées et d'autre part les cas de minima secondaires créés par la présence de bruit.

Selon un mode de réalisation particulier, une troisième condition doit être remplie: l'erreur maximale doit être significative par rapport au niveau de bruit de l'image.

Selon un mode de réalisation particulier, le niveau de bruit de l'image est égal au minimum, sur l'ensemble des blocs d'une image, des erreurs minimales pour chaque bloc et de la différence :

$$\text{Errminabs} = \min_{i=1,...,a} \{\text{Errmin}(i,j),(\text{Errmax}-\text{Errmin})(i,j)\}$$

$$j=1,...,b$$

où Errmin est l'erreur minimale déterminée pour le bloc (i,j), et où Errmax est l'erreur maximale déterminée pour le bloc (i,j), a et b le nombre de blocs horizontaux et verticaux de l'image.

Il est bien évident que les procédés de détection et de correction peuvent s'appliquer indépendamment l'un de l'autre.

D'autres caractéristiques et avantages de l'invention apparaîtront à travers la description de l'exemple de réalisation non limitatif décrit dans ce qui suit et illustré à l'aide des figures parmi lesquelles:

- la figure 1 est un diagramme représentant les trames d'entrée et de sortie du présent procédé par rapport à l'axe du temps,
- la figure 2 est un diagramme bloc d'un dispositif mettant en oeuvre le procédé conforme au présent exemple de réalisation,

- la figure 3 représente un chronogramme des trames à certains points du dispositif de la figure 2,
- la figure 4 représente une image comportant des structures périodiques, ainsi qu'un exemple de vecteurs de mouvement pouvant être générés pour une telle image,
- la figure 5 représente un histogramme des erreurs d'une ligne d'une matrice d'erreur liée à une composante verticale d'un vecteur de mouvement donnée et contenant la plus petite erreur de la matrice,
- la figure 6 illustre le procédé mis en oeuvre pour tenir compte de blocs périodiques dans la détermination du champ de vecteurs de mouvement d'une image,
- la figure 7 représente deux filtres passe-bas,
- la figure 8 représente les trames 1, 2 et 2/3 et la position d'un sous-bloc par rapport aux blocs principaux dont les vecteurs sont sélectionnés en tant que vecteurs candidats pour le sous-bloc,

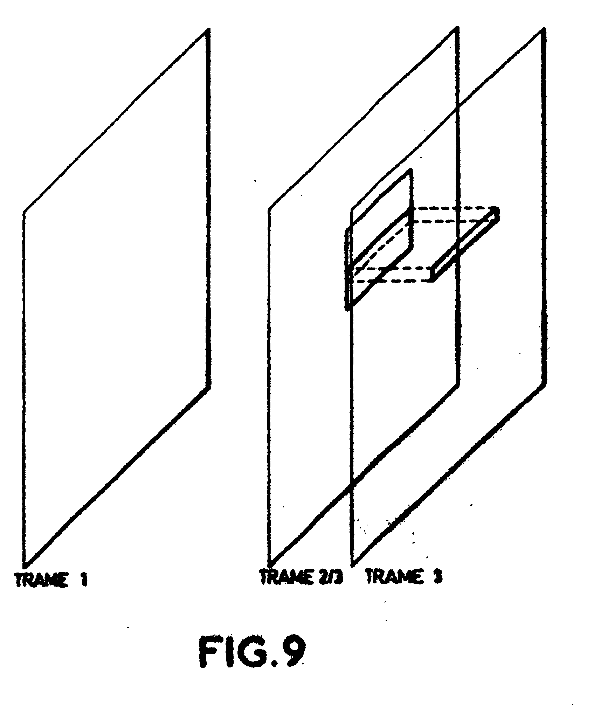

- la figure 9 représente les trames 1, 2/3 et 3 et la position d'un bloc intermédiaire par rapport aux blocs principaux dont les vecteurs sont utilisés en tant que vecteurs candidats,
- la figure 10 (a) représente une fonction non linéaire utilisée par le procédé de réduction de bruit temporelle récursive,
- la figure 10 (b) est un diagramme bloc d'un filtre de réduction de bruit temporelle récursive,
- la figure 11 représente un filtre spatio-temporel de type médian utilisé pour l'interpolation de la trame 1,
- la figure 12 illustre un problème lié à la présence de structures périodiques dans l'image;
- la figure 13 donne deux exemples de mise en oeuvre du filtre spatio-temporel utilisé pour l'interpolation de la trame 2,
- la figure 14 donne deux exemples de mise en oeuvre du filtre spatio-temporel utilisé pour l'interpolation de la trame 3,
- la figure 15 représente un chronogramme des trames à certains points du dispositif de la figure 2 lors du mode film, et
- la figure 16 comprend trois schémas (a,b,c) de trames par rapport au temps illustrant respectivement le mode de fonctionnement normal pour des trames vidéo, le mode de fonctionnement normal pour des trames film et le mode de fonctionnement spécifique pour des trames film.

L'invention sera expliquée en relation avec un procédé de conversion de fréquence d'images de télévision de 50 Hz entrelacées à 75 Hz progressives.

Deux demandes de brevet déposées conjointement le même jour traitent d'autres aspects de ce procédé.

Conventions

Une période est définie comme étant l'intervalle temporel permettant d'afficher une trame de sortie, soit 1/75 secondes. Un cycle est défini comme étant l'intervalle de temps nécessaire pour un cycle complet de l'algorithme, soit trois périodes ou 1/25 secondes.

Le procédé se répète identique à lui-même toutes les trois trames de sortie ou toutes les deux trames d'entrée. Par convention, la première trame de sortie porte le numéro 1, la deuxième trame porte le numéro 2, et ainsi de suite. Mais du fait que le traitement est cyclique, les trames 1, 4, 7 ... seront générées de façon identique; on les appellera des trames de type 1. De même, les trames 2, 5, 8 ..., respectivement les trames 3, 6, 9... seront générées de façon identique et respectivement appelées trames de type 2 et 3.

Par convention, les trames d'entrée seront numérotées par référence à la position qu'elles occupent vis-à-vis des trames de sortie. Ainsi, une trame d'entrée correspondant temporellement à une trame de sortie portera le même numéro que cette trame de sortie. Une trame d'entrée située entre deux trames de sortie portera les numéros de ces deux trames: par exemple, une trame d'entrée située entre les trames de sortie 2 et 3 sera appelée trame 2/3.

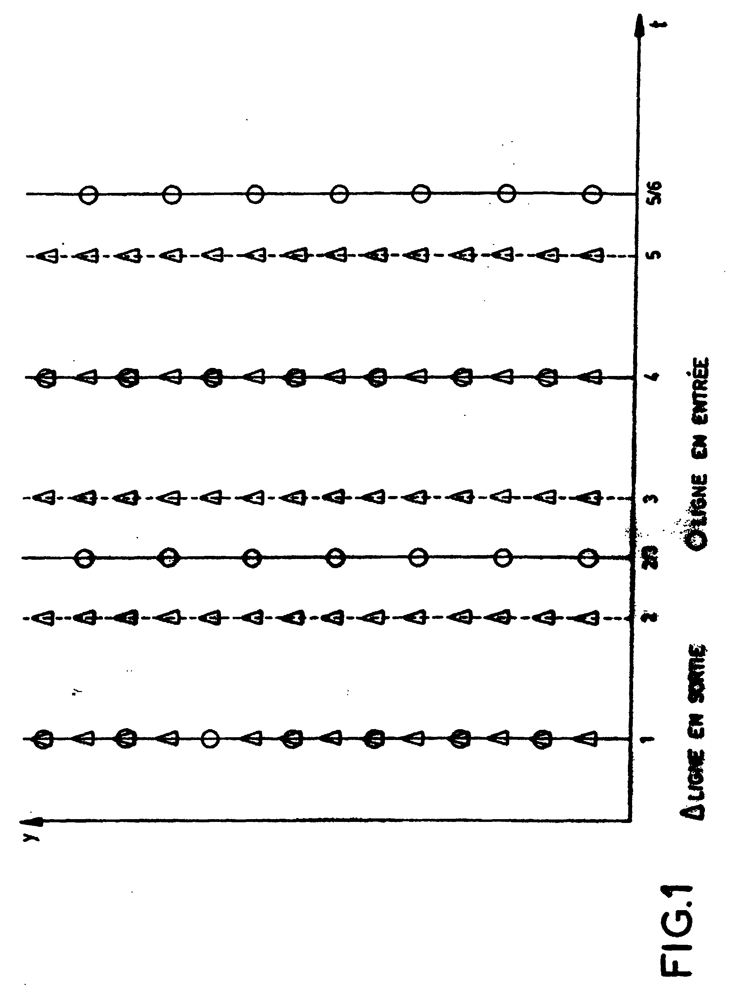

La figure 1 illustre les positions respectives des trames d'entrée et de sortie.

La trame d'entrée numéro 1 comporte la première ligne affichée à l'écran d'un téléviseur; elle a été indicée ligne 0. Cette trame, donc la trame d'entrée impaire, est formée des ligne 0, 2, 4, ..., 624. Une trame 2/3, paire, comportera les lignes 1, 3, ..., 623. La variable y représentera les numéros de ligne, croissantes du haut vers le bas de l'écran, dans le sens du balayage. La variable x sera utilisée pour désigner l'abscisse d'un pixel et croît de gauche à droite également dans le sens du balayage. t représentera le temps, normalisé de façon à ce qu'une unité temporelle représente un cycle. La trame 1 sera située au temps 0, la trame 2/3 au temps 1/2 et la trame 4 au temps 1.

Les trames de sortie comporteront tous les numéros de ligne, puisque ce sont des trames progressives. Le signal de luminance à la position d'un pixel donné sera représenté par la variable $P(x,y,t)$.

Schéma général

Avantageusement, le procédé de conversion décrit et le dispositif de mise en oeuvre ne nécessitent qu'une seule mémoire de trame. Cette contrainte s'explique par le fait que le procédé est destiné à être implémenté dans des appareils grand public fabriqués en grande série. La réduction du coût de mise en oeuvre du point de vue matériel est donc un facteur important.

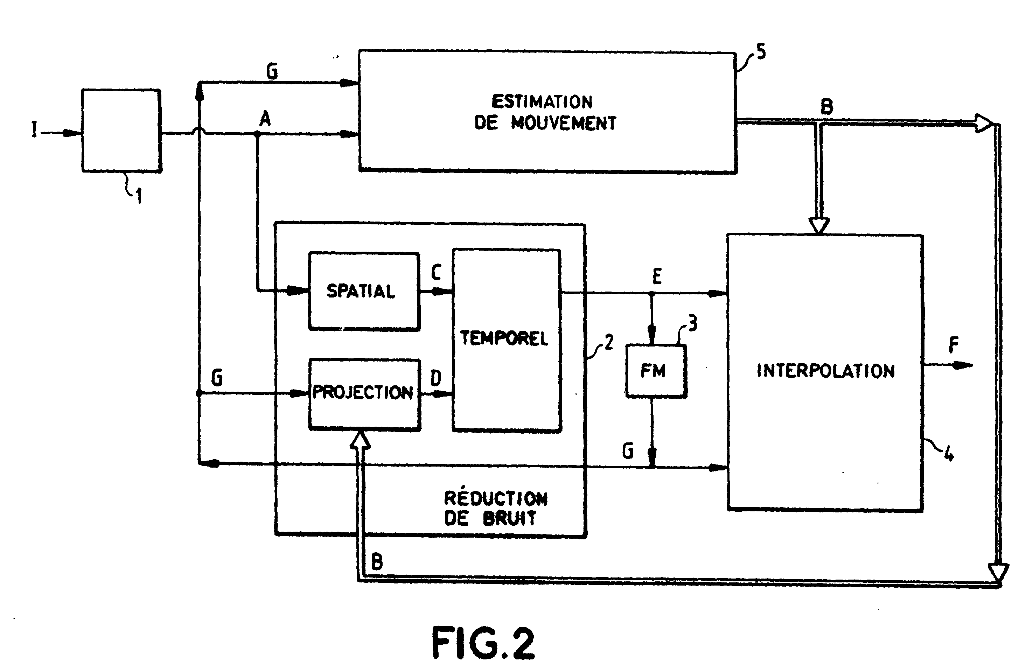

La figure 2 est un diagramme bloc du dispositif de mise en oeuvre de l'invention. Chaque élément sera vu en détail par la suite.

Le dispositif comporte une mémoire vive 1 organisée en FIFO et destinée à augmenter la fréquence des trames de 50 à 75 Hz, en répétant en lecture une trame sur deux. La mémoire 1 reçoit donc en entrée des trames à la fréquence de 50 Hz et fournit des trames à la fréquence de 75 Hz.

Le dispositif comporte d'autre part un circuit de réduction de bruit 2, comprenant deux filtres: un filtre spatial destiné à réduire principalement les bruits de type impulsionnel, et un filtre temporel récursif. Le filtre spatial reçoit les trames issues de la mémoire 1, puis transmet les trames filtrées au filtre temporel. Le filtre temporel reçoit également une trame dite trame projetée, composée d'informations de trames précédemment traitées. Le fonctionnement du filtre temporel sera vu plus en détail ultérieurement.

Une trame filtrée temporellement est stockée dans une mémoire trame 3 et transmise à un interpolateur 4. L'interpolateur 4 réalise l'interpolation entre deux trames d'entrée pour fournir les trames de sortie du dispositif. L'interpolateur 4 reçoit des vecteurs de mouvement de la part d'un circuit d'estimation de mouvement 5. L'estimation de mouvement est réalisée entre la trame stockée dans la mémoire de trame 3 et la trame "courante" lue dans la mémoire 1. Un certain nombre d'informations relatives à l'estimation de mouvement sont utilisées lors de la réduction de bruit.

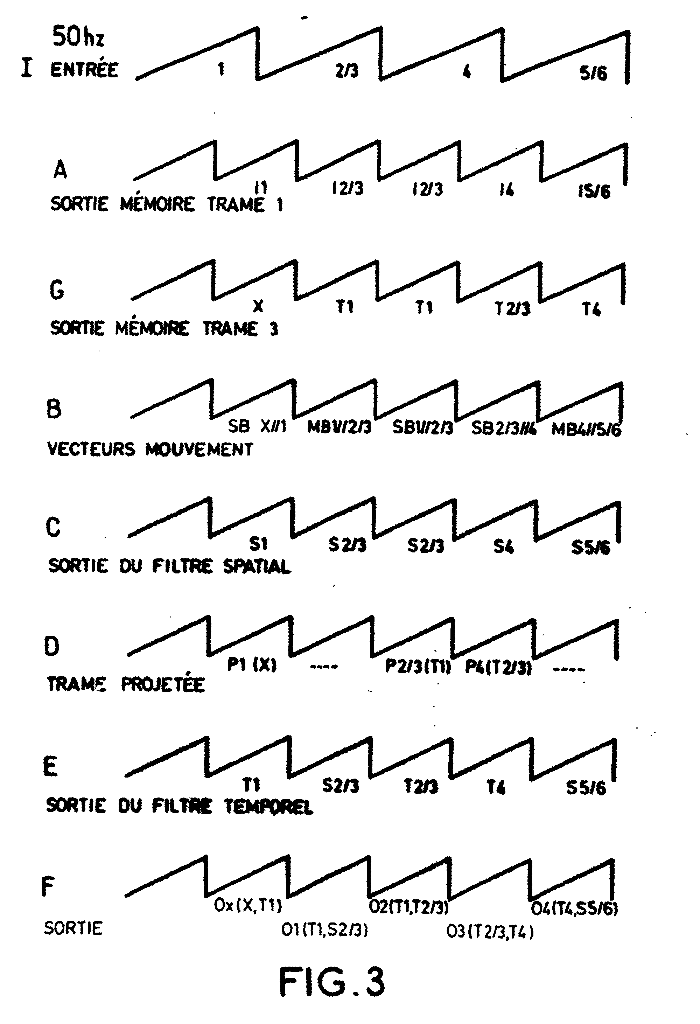

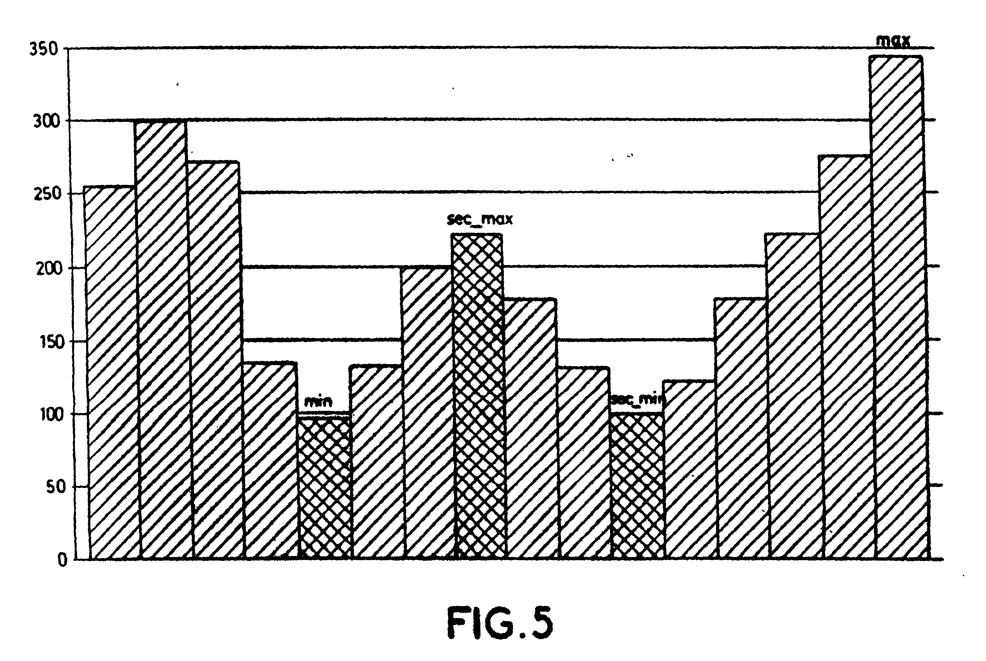

La figure 3 comporte les chronogrammes relatifs aux trames traitées par les différents éléments du dispositif de la figure 5. Les lettres identifiant chaque chronogramme correspondent aux lettres identifiant les connexions entre les éléments de cette dernière figure.

Une trame est représentée sous la forme d'une dent de scie correspondant au balayage de cette trame.

Le premier chronogramme (I) correspond aux trames d'entrée de la mémoire 1, c'est à dire aux trames entrelacées à 50 Hz. La trame 1 est impaire, la trame 2/3 est paire etc...

Le second chronogramme (A) correspond à la sortie de la mémoire 1: les trames sont relues à une vitesse de 75 Hz. La trame 1 (et les trames 4, 7 ...) est lue une fois, la lecture débutant avant même que l'écriture ne soit achevée. La trame 2/3 (et les trames 5/6, 8/9 ...) est lue deux fois.

Le troisième chronogramme (G) représente la sortie de la mémoire trame 3. Cette mémoire maintient un écart temporel d'une trame entre sa trame d'entrée et celle à sa sortie, pour que l'interpolation puisse se faire correctement. Dans ce but, la mémoire ne se comporte pas simplement comme un retard d'une trame. Si cela était le cas, la trame filtrée 2/3 serait à la fois présente à l'entrée de la mémoire et à sa sortie. C'est donc la trame filtrée 1 qui est répétée deux fois à la sortie de la mémoire de trame.

Le quatrième chronogramme (B) représente les périodes de calcul des informations fournies par l'estimateur de mouvement au reste du dispositif. Comme on le verra plus en détail par la suite, l'estimateur de mouvement se comporte différemment à chaque période d'un cycle donné. Pour les trames de type 1, des vecteurs de mouvement grossiers sont calculés (référence "MB") pour des blocs larges (appelés blocs principaux), tandis que des vecteurs de mouvement plus fins sont déterminés pour les deux autres trames (référence "SB") pour des sous-blocs des blocs principaux. Le calcul des vecteurs pour les sous-blocs se base sur les vecteurs grossiers des blocs principaux. La référence "MB1//2/3" du chronogramme indique par exemple la période de l'estimation de mouvement "grossière" entre la trame 1 et la trame 2/3.

Le cinquième chronogramme (C) concerne la sortie du filtre spatial du circuit de réduction de bruit. Ce filtrage se fait directement sur la trame lue dans la mémoire 1.

Le sixième chronogramme (D) représente la trame projetée comparée par le circuit de réduction de bruit à la trame filtrée spatialement.

Le septième chronogramme (E) indique la sortie du filtre temporel et par conséquent l'entrée de l'interpolateur 4 et de la mémoire de trame 3.

Le dernier chronogramme indique la sortie de l'interpolateur et donc la sortie du dispositif en soi.

Estimateur de mouvement

L'estimateur de mouvement travaille selon le procédé de comparaison par blocs hiérarchisée. Ce procédé se déroule en deux étapes. On commence par diviser l'image en blocs grossiers ou blocs principaux de 16∗32 pixels dont on détermine le mouvement, puis on divise ces blocs principaux en sous-blocs pour affiner le champ des vecteurs.

L'estimation est effectuée pour le signal de luminance, qui contient généralement des informations suffisantes pour décrire le mouvement des objets sur l'écran. Bien entendu, il est possible d'utiliser également l'information de chrominance ou de combiner les informations de chrominance et de luminance pour l'estimation.

Avant toutes choses, on procède à un sous-échantillonnage des trames d'entrée par un facteur 2 dans les directions horizontales et verticales. On divise ainsi par quatre les calculs nécessaires à l'estimation. Les trames sous-échantillonnées ne seront cependant utilisées que pour l'estimation de mouvement. L'interpolation des trames de sortie se fera à partir des trames complètes.

Ce sous-échantillonnage restreint naturellement les composantes des vecteurs de mouvement à des valeurs paires. Ceci n'est pas gênant dans le sens vertical, puisque cette contrainte est déjà imposée par l'entrelacement des trames à la diffusion.

Lors du sous-échantillonnage, on ne gardera que les lignes impaires et les colonnes paires. On continuera cependant à repérer les points de l'image à l'aide du système de coordonnées utilisé jusqu'ici, en s'interdisant les pixels n'appartenant pas au domaine sous-échantillonné.

Selon le présent mode de réalisation, avant de procédér au sous-échantillonnage, on applique à la trame un filtre passe-bas destiné à supprimer les hautes fréquences spatiales, sources de superposition spectrale. Pour ce faire, en horizontal, on utilise par exemple une fenêtre triangulaire à sept coefficients:

$$\text{Phorizontal}(x,y,t) = \frac{1}{16}\begin{bmatrix} 1 & 2 & 3 & 4 & 3 & 2 & 1 \end{bmatrix}\begin{bmatrix} P(x-3,y,t) \\ P(x-2,y,t) \\ P(x-1,y,t) \\ P(x,y,t) \\ P(x+1,y,t) \\ P(x+2,y,t) \\ P(x+3,y,t) \end{bmatrix}$$

Dans la direction verticale, on procède également à un filtrage. Comme on ne garde que les lignes impaires, cela correspond aux numéros de lignes verticalement interpolées de la trame d'entrée 1 et aux numéros des lignes d'entrée de la trame 2/3. Afin d'harmoniser les contenus spectraux des deux trames d'entrée sous-échantillonnées, on procède à un filtrage passe-bas de la trame d'entrée 2/3:

$$\text{Psous} - \text{échantillonné}(x,y,\tfrac{1}{2}) = \frac{1}{4}\begin{bmatrix} \text{Phorizontal}(x,y-2,\tfrac{1}{2}) \\ +2\text{Phorizontal}(x,y,\tfrac{1}{2}) \\ +\text{Phorizontal}(x,y+2,\tfrac{1}{2}) \end{bmatrix}$$

Pour les trames de type 1, on génère des lignes impaires en utilisant une simple moyenne verticale:

$$\text{Psous-échantillonné}(x,y,0) = \frac{1}{2}[\text{Phorizontal}(x,y-1,0) + \text{Phorizontal}((x,y+1,0)]$$

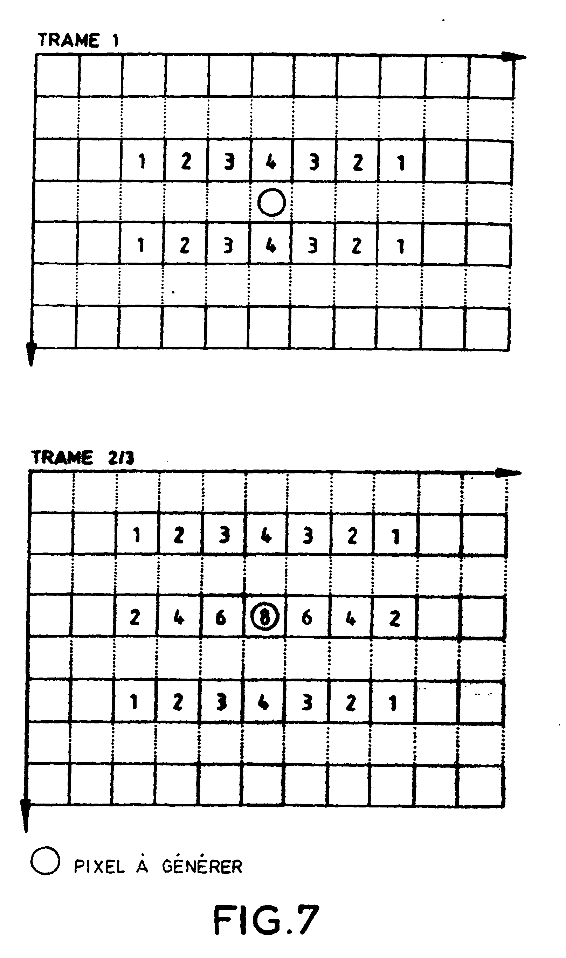

Les fonctions Psous-échantillonné(x,y,0) et Psous-échantillonné(x,y,$\tfrac{1}{2}$) ne sont définies que pour x pair et y impair. Pour simplifier, les trames sous-échantillonnées seront notées P'(x,y,t). Les filtres utilisés sont représentés à la figure 7.

Comme cela a déjà été mentionné, le procédé d'estimation hierarchisé se comporte différemment pendant les trois périodes d'un cycle:

- pendant la période 1, on calcule les vecteurs correspondant aux blocs principaux, représentatifs du mouvement entre les trames 1 et 2/3,
- pendant la période 2, on calcule les vecteurs correspondant aux sous-blocs, représentatifs de façon plus précise du mouvement entre les trames 1 et 2/3, le calcul se faisant à l'aide des vecteurs déterminés pendant la période 1,
- pendant la période 3, on calcule les vecteurs correspondant aux sous-blocs, représentatifs du mouvement entre les trames 2/3 et 4. Dans ce dernier cas, le calcul se fait à partir de vecteurs de blocs intermédiaires, qui sont constitués de valeurs rafraîchies des vecteurs correspondant aux blocs principaux.

Détermination du champ de vecteurs grossiers entre les trames 1 et 2/3

L'image est tout d'abord découpée en blocs principaux de 32*16 pixels. Comme la taille d'une image active est de 720*576 pixels pour la fréquence d'échantillonnage standard, on a ainsi 23 blocs principaux par ligne et 36 par colonne.
Pour un bloc principal indicé (i,j) avec i compris entre 0 et 22 et j compris entre 0 et 35 et appartenant par définition à la trame d'arrivée (la trame temporellement la plus récente), donc une trame 2/3 ou équivalente, on définit l'erreur commise pour un vecteur de mouvement (u,v) par:

$$E_{(i,j)}(u,v) = \sum_{\substack{k = 0,2,4,\ldots,30 \\ l = 0,2,\ldots,14}} \left| P'\left[\begin{pmatrix} M_x *i+k \\ M_y *j+l \end{pmatrix}, t\right] - P'\left[\begin{pmatrix} M_x *i-u \\ M_y *j-v \end{pmatrix}, t-1/2\right]\right|$$

avec Mx=32, taille en abscisse d'un bloc principal,
et My = 16, taille en ordonnée d'un bloc principal.

On calcule alors la matrice des erreurs pour chaque bloc principal: chaque élément de cette matrice correspond à une erreur liée à un vecteur de mouvement possible, soit:

$$Err(i,j) = (E(i,j)(u,v)) \text{ pour } u=-16,-14,\ldots,14,16; v= -4, -2,0,2,4$$

Les composantes des vecteurs de mouvement sont paires et comprises respectivement entre -16 et +16, et -4 et +4. On compare donc le bloc principal considéré à des blocs d'une fenêtre de recherche d'une trame précédente, cette fenêtre de recherche étant située autour de la position du bloc principal rapportée à cette trame précédente. Le vecteur retenu parmi l'ensemble des vecteurs est note (u',v') et correspond au minimum de la fonction d'erreur.

$$Errmin = min(E(i,j)(u,v)) = Err(i,j)(u', v')$$

pour u=-16,-14,...,14,16 et v=-4,-2,0,2,4

Le champ de vecteurs de l'image entière est calculé en balayant, bloc par bloc, et en appliquant cette recherche à chaque bloc principal.
On procède par ailleurs lors du calcul du champ de vecteurs de niveau bloc principal à une estimation du bruit de l'image. On calcule pour ce faire une valeur supplémentaire: l'erreur maximale de la matrice:

$$Errmax = max(E_{(i,j)}(u,v))$$

pour u=-16,-14,...,14,16; v=-4,-2,0,2,4

Errmin représente une estimation de la somme de deux bruits: le bruit inhérent au signal de luminance, et le bruit de quantification des vecteurs de mouvement. En effet, si le vecteur de mouvement que l'on a calculé correspond bien au mouvement réellement présent dans l'image, Errmin sera la somme des différences de luminosité existant dans deux surfaces identiques de la taille d'un bloc principal: ces différences auront alors pour unique origine le bruit de l'image.
Par contre, si du fait de la quantification des vecteurs possibles, le mouvement est mal représenté par le vecteur calculé, alors s'ajoutera au bruit précédent une composante due à l'erreur faite sur ce vecteur: Errmin sera trop sévère pour définir le bruit réel de l'image.

On définit par conséquent un second estimateur, à savoir Errmax-Errmin. Il est lui aussi fonction du bruit de quantification de l'image. Sur une zone uniforme, la différence entre l'erreur maximale et l'erreur minimale provient uniquement du bruit de l'image. Si le bruit de quantification est fort, alors Errmin et Errmax sont affectés tous les deux; on peut espérer que cet estimateur est moins sensible au bruit de quantification, éliminé par la différenciation.

On définit d'autre part deux estimateurs Errminabs et Noiseest:

$$Err\text{min}abs = \text{min } \{Err\text{min}(i,j), (Err\text{max} - Err\text{min})(i, j)\}$$

$$i = 0,...,22$$

$$j = 0,...,35$$

$$Noiseest = \min_{i,j} \left\{ Err \min(i, j) \right\}$$

Corrections apportées aux calculs de la période 1

Selon une variante de réalisation, une première correction est apportée lorsque l'image comporte des zones uniformes.

Sur une zone uniforme, comme un morceau de ciel bleu, la matrice des erreurs est approximativement constante. Les fluctuations sont dues à la présence de bruit dans l'image. Le vecteur calculé par l'intermédiaire du procédé conforme à l'invention est donc imprévisible, et il peut en résulter une forte hétérogénéité du champ de vecteurs, ce qui est préjudiciable à la suite du procédé. En présence de telles hétérogénéités, on décide de forcer le vecteur correspondant à zéro.

Ce forçage est en fait réalisé composante par composante. En effet, si on considère une frontière horizontale dans l'image (une falaise surmontée de ciel bleu par exemple), la composante u du vecteur de mouvement n'est pas fixée car les erreurs sont constantes sur chaque ligne de la matrice. On force donc cette composante à zéro. De même pour la composante v en cas de frontière verticale.

Selon le présent exemple de réalisation, le critère employé pour déterminer si une composante de vecteur doit être forcée à zéro est lié au niveau de bruit calculé ci-dessus.

$$\text{Si } Err(i,j)(0,v)-Err(i,j)(u,v)<Errminabs*seuil\_x \text{ alors } u=0$$

$$\text{Si } Err(i,j)(u,0)-Err(i,j)(u,v)<Errminabs*seuil\_y \text{ alors } v=0$$

$$\text{avec } Errminabs = \text{min}\{Errmin(i,j),(Errmax-Errmin)(i,j)\}$$

$$i=0,...,22$$

$$j=0,...,35$$

Les valeurs seuil_x et seuil_y sont par exemple égales à des multiples de 2: 2, 4, 8...

En clair, si la différence entre les erreurs engendrées par le vecteur de composante nulle et le vecteur trouvé par l'estimation de mouvement est du même ordre de grandeur que le bruit estimé inhérent à l'image, alors la correction est apportée.

Selon le présent exemple de réalisation de l'invention, une correction est apportée lorsque l'image contient des structures périodiques.

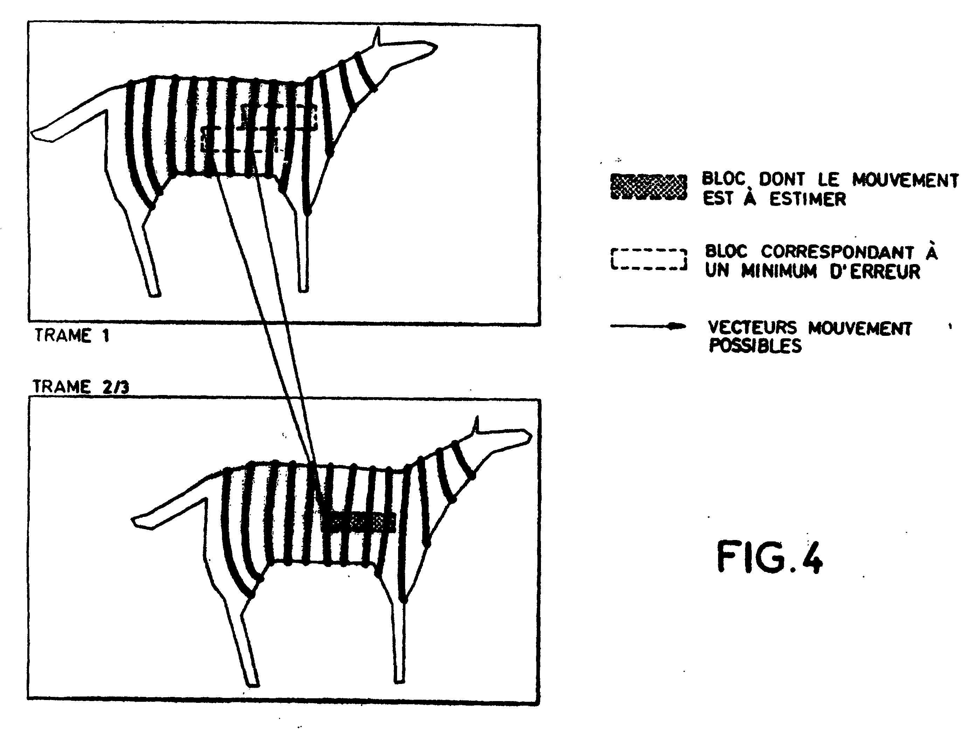

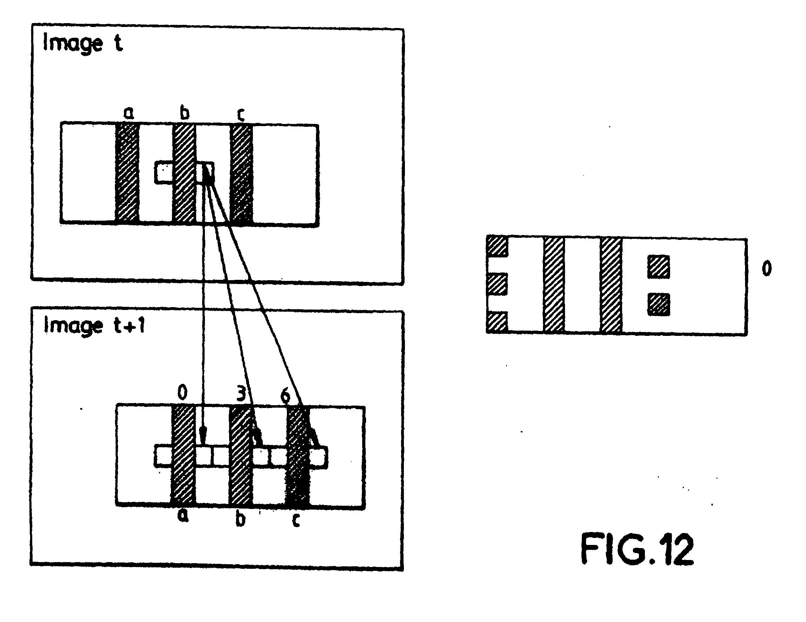

Le problème posé par ce genre de structure a déjà été abordé en introduction. Les figures 4 et 12 permettent cependant de le préciser pour mieux comprendre la détection et la correction envisagées.

Le bloc en grisé de la figure 4 représente le bloc dont le mouvement est à déterminer, tandis que les deux blocs en pointillé représentent deux blocs dans l'image de référence donnant lieu à un minimum d'erreur dans la matrice des erreurs. Un vecteur incorrect génèrera des défauts très perceptibles lors de l'interpolation des trames de sortie.

Ces défauts sont illustrés en gros plan par la figure 12, où le vrai mouvement d'un bloc entre deux trames de parité opposée est donné par un vecteur ayant une composante horizontale de +2. Si le vecteur de mouvement est nul, alors les défauts illustrés dans la partie droite de la figure apparaîssent lors de l'entrelaçage. La hauteur des lignes a été exagérée pour bien montrer les défauts.

Dans le cadre du présent exemple de réalisation, on se restreindra à une périodicité horizontale (par exemple un zèbre à rayures verticales), étant donné que la taille des blocs principaux et la gamme des composantes verticales possibles des vecteurs de mouvement rendent peu probable ce type d'erreur dans la direction verticale. La gamme des composantes verticales est trop restreinte pour permettre une détection ou une correction efficace. Néanmoins, l'homme du métier pourra facilement adapter la correction décrite ci-après à notamment une périodicité verticale.

Deux étapes seront maintenant abordées: la détection, puis la correction de ce type d'erreur.

La détection de ce type de défaut est effectuée à partir de la matrice des erreurs Err. En effet, la ligne contenant le minimum des éléments de la matrice contiendra aussi un ou plusieurs minima secondaires comme expliqué ci-dessus.

Tout d'abord, on extrait de la matrice la ligne (Row(u)) des erreurs contenant le minimum avec -16< =u< = +16. Soit umin l'indice du minimum dans Row(u). On commence par détecter le minimum secondaire. Il se caractérise comme étant un minimum local:

$$\text{Row(u-1)} > \text{Row(u)} \qquad \text{et} \qquad \text{Row(u + 1)} > \text{Row(u)}$$

Parmi les minima secondaires répondant au critère, on ne retient que le plus petit. Soit Usec_min son indice dans la ligne Row(u). On détecte ensuite le maximum secondaire, situé entre les positions umin et usec_min. Il se caractérise comme étant un maximum local:

$$\text{Row(u-1)} < \text{Row(u)} \qquad \text{et} \qquad \text{Row(u + 1 )} < \text{Row(u)}$$

Parmi les maxima secondaires répondant au critère, on ne retient que le plus grand. Soit usec_max son indice dans Row(u).

L'histogramme de la figure 5 représente un exemple caractéristique d'une telle situation.

On soumet le minimum secondaire et le minimum absolu, ainsi que le maximum secondaire à deux tests supplémentaires pour s'assurer de la présence d'une structure périodique:

- les deux minima doivent être proches en valeur (C1),
- la différence entre eux et le maximum secondaire doit être significative par rapport au niveau de bruit courant (C2).

Ces précautions doivent être prises pour éviter que ne soit considéré comme périodique un bloc principal au bord du zèbre. En effet, un bloc principal peut être à cheval sur le bord du zèbre, une moitié appartenant à l'animal, l'autre à la savane. Ce bloc peut donner un minimum d'erreur, qui sera cependant supérieur aux minima liés à une périodicité. On évite aussi ainsi de considérer comme périodique une matrice d'erreur bruitée.

On notera:

Errmin = Row(umin)
Errmax = Row(umax)
Err_sec_min = Row(usec_min)
Err_sec_max = Row(usec_max)

On impose les conditions suivantes:

(C1) Err_sec_min - Errmin < a*Errmax
(C2) Err_sec_max - Err_sec_min > b*Errminabs
(C3) Errmax > c*Errminabs

Selon le présent exemple, on prendra

a =0.5
b=2
c=4

Une ligne d'erreur vérifiant toutes les conditions sera issue d'une matrice associée à un bloc contenant vraisemblablement une structure périodique.

Selon une variante de réalisation, on combine uniquement les deux premières conditions.

Il s'agit ensuite de corriger le vecteur associé à ce bloc principal.

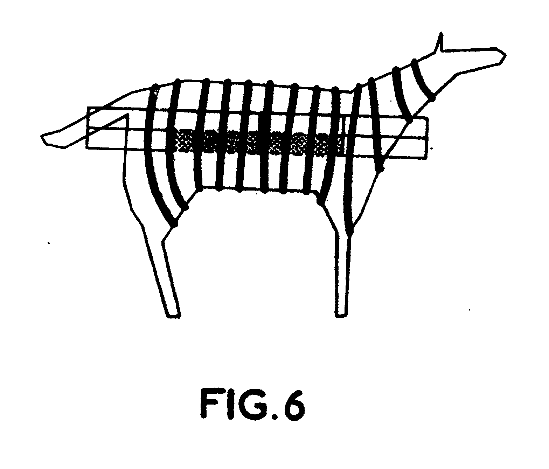

Pour cela, il ne suffit pas de prendre en compte uniquement le bloc principal périodique. Si l'on se rapporte au dessin du zèbre, en supprimant par la pensée toute la partie de l'animal qui n'est pas comprise dans le bloc principal, on obtient un rectangle avec des rayures verticales. En cherchant à quelle partie de l'image précédente correspond ce rectangle, on trouvera plusieurs rectangles rayés possibles, sans pouvoir décider lequel devra être pris en compte. Pour faire ce choix, on procède à l'agrandissement progressif du bloc principal pour lever l'incertitude. Le procédé est illustré par la figure 6, où les blocs en grisé sont les blocs périodiques d'une ligne de l'image.

Dans une ligne donnée, la détection d'un bloc principal périodique va signaler que l'on a trouvé toute une zone de l'image contenant une structure périodique. On ne retiendra pas tout de suite le vecteur de mouvement de ce bloc principal; on stockera par contre la matrice d'erreur correspondant à ce bloc.

On passe au bloc principal suivant sur la même ligne. S'il est lui aussi périodique, on stocke à nouveau sa matrice d'erreur. On finira par arriver à la fin de la structure périodique, en l'occurrence le bord droit du zèbre.

Soient (i1,J1) les coordonnées du premier bloc principal périodique rencontré, et (i2,J1) celles du dernier. On procède au cumul membre à membre de toutes les matrices stockées. On obtient une matrice dont les composantes vaudront:

pour tout $u\varepsilon$[-16,-14,..., 14,16] et pour tout $v\varepsilon$[-4,...,4]

$$Sum(u,v) = \sum Err(i,j)(u,v)$$

$$i = i1, i2$$

$$j = j1$$

On aurait obtenu la même matrice d'erreurs si on avait appliqué l'algorithme de base à un bloc principal de largeur (i2-i1 +1) fois la largeur d'un bloc principal unique. La matrice d'erreur a bien évidemment la même taille.

Cette matrice ne suffit pas encore pour déterminer le bon vecteur de mouvement. Il faut considérer les blocs au début et à la fin de la structure périodique. En effet, ces blocs contiennent en général le bord de la zone périodique en mouvement et permettent donc de lever l'ambiguïté des informations contenues dans la matrice d'erreur.

Après avoir déterminé la matrice ci-dessus, on procède de la manière suivante:

- on considère les vecteurs des deux blocs principaux en début et fin de la structure périodique. Pour chacun, on extrait de la matrice Sum l'erreur correspondante. Le vecteur dont l'erreur est la plus petite sera retenu,
- si ce vecteur ne correspond pas à un minimum local de sa ligne de la matrice d'erreur Sum, on sélectionne le minimum de la matrice d'erreur et on retient le vecteur correspondant,
- enfin, pour obtenir un cohérence verticale entre les blocs périodiques adjacents, on teste si un des blocs immédiatement supérieurs à cette rangée de blocs périodiques est également périodique et dans ce cas, on retient son vecteur, à condition toutefois qu'il corresponde bien à un minimum dans la ligne de la matrice d'erreur.

Le vecteur retenu sera ainsi le vecteur utilisé pour l'ensemble des blocs de la structure périodique.

Après avoir effectué la détermination des vecteurs et éventuellement la première et ou la seconde correction, on obtient un champ de vecteurs noté:

$$\overrightarrow{MB}(i,j) \text{ avec } 0 \le i \le 22 \text{ et } 0 \le j \le 35$$

### Affinage de la résolution spatiale du champ de vecteurs

Cette phase du procédé est utilisée deux fois de suite, pendant les périodes 2 et 3.

Il s'agit d'essayer de caractériser plus finement le mouvement en attribuant des vecteurs à des éléments plus petits: les sous-blocs (qui, selon le présent exemple ont une taille de 4*4 pixels). Ceci permettra d'obtenir une meilleure adéquation du champ de vecteurs aux bords d'objets mobiles.

Selon le présent exemple, il y a 180 sous-blocs dans une largeur d'image et 144 sous-blocs en hauteur.

Conformément au présent exemple de réalisation, on ne recalcule pas l'ensemble des erreurs associées à la gamme entière de vecteurs de mouvements possibles comme cela a été fait pour les blocs principaux. On choisit pour chaque sous-bloc des vecteurs candidats parmi les vecteurs des blocs principaux et on détermine l'erreur générée par chacun de ces vecteurs candidats.

Dans le cadre du présent exemple, les vecteurs candidats pour un sous-bloc sont les vecteurs des quatre blocs principaux les plus proches de ce sous-bloc. Le vecteur engendrant l'erreur la plus faible sera attribué au sous-bloc.

Le fait d'utiliser des vecteurs candidats associés à des blocs principaux adjacents au bloc contenant le sous-bloc considéré permet de déterminer précisément les bords des objets mobiles, et par conséquent les frontières des zones de mouvement uniforme: si le bord d'un objet en mouvement dépasse juste un peu dans un bloc principal, le vecteur trouvé pour ce dernier sera un vecteur indiquant l'arrière-plan et non l'objet en mouvement, parce que la plus grande partie des pixels de ce bloc principal appartiennent à cet arrière-plan, dont le mouvement peut être différent de celui de l'objet. Par conséquent, le bord de l'objet ne sera pas reconstitué de manière correcte.

Par contre, si pour les sous-blocs du bord de l'objet, on considère aussi les vecteurs des blocs principaux adjacents, le mouvement de ces sous-blocs sera correctement estimé, puisqu'au moins un des blocs principaux adjacents fera partie de l'objet en question.

Trame 2

On cherche à déterminer le champ de vecteurs minimisant la différence des luminances des sous-blocs entre les trames 1 et 2/3. Cependant, c'est la trame de sortie 2 qui sera finalement affichée. Pour améliorer la précision, on considère par conséquent les sous-blocs comme faisant partie de cette trame 2.

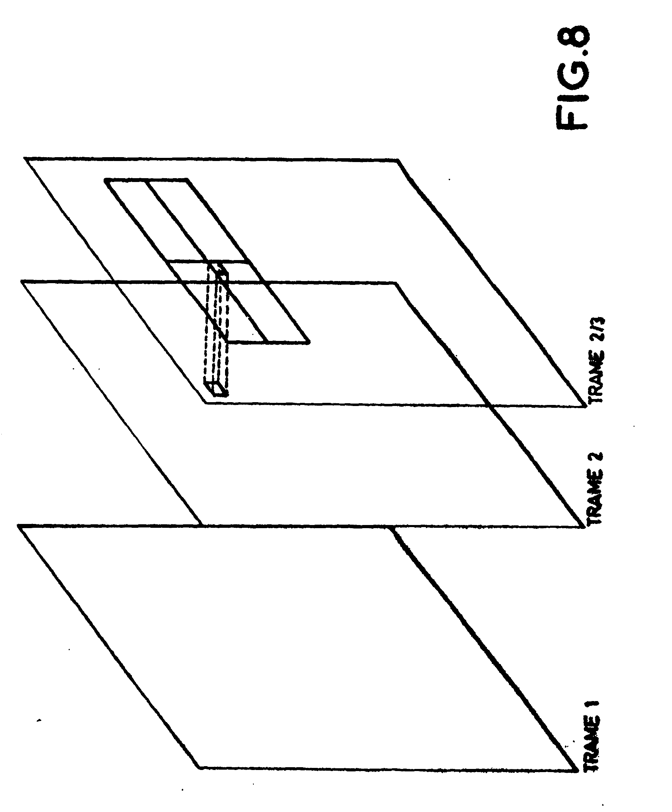

Pour chaque sous-bloc de la trame 2, on détermine quatre blocs principaux adjacents de la manière suivante: on projette orthogonalement le sous-bloc sur la trame 2/3 (voir figure 8). Les quatre blocs les plus proches seront alors choisis comme suit:

Si on parle du sous-bloc (i,j) ($0<i<180$, $0<j<144$), on dira que les 4 blocs principaux pertinents sont:

Si $i \bmod 8 < 4$ alors $i'=-1$ sinon $i'= 1$

Si $j \bmod 4 < 2$ alors $j'=-1$ sinon $j'= 1$

$Rel_{(i,j)} (1) = MB(i \vee 8, j \vee 4)$

$Rel_{(i,j)} (2) = MB(i \vee 8+i', j \vee 4)$

$Rel_{(i,j)}(3) = MB(i \vee 8, j \vee 4+j')$

$Rel_{(i,j)} (4) = MB(i \vee 8+i', j \vee 4+j')$

où le quotient de la division euclidienne de a par b est noté $a \vee b$ et son reste $a \bmod b$.

Une fois les vecteurs candidats choisis, il faut les comparer entre eux. Comme indiqué plus haut, le sous-bloc fait partie de la trame affichée. Le vecteur du bloc principal en question est donc mis à l'échelle. On commence par en calculer les 2/3, et on arrondit le résultat. On obtient ainsi le vecteur de mouvement entre la trame 1 et la trame 2. Le vecteur restant correspond au mouvement entre la trame 2 et la trame 2/3. Si on appelle ces deux vecteurs respectivement *rear vector* et *front vector,* on a:
Pour m = 1,2,3

$$\text{Rear}_{(i,j)}(m) = \text{int}\left(\frac{2}{3} \cdot \text{Rel}_{(i,j)}(m)\right)$$

$$\text{Front}_{(i,j)}(m) = \text{Rel}_{(i,j)}(m) - \text{Rear}_{(i,j)}(m)$$

On calcule ensuite les quatre erreurs associées à ces quatre vecteurs:
Pour m =1,2,3,4

$$Err_{(i,j)}(m) = \sum_{\substack{k=0,2 \\ l=0,2}} \left| P'\left[\begin{pmatrix} S_x \cdot i + k \\ S_y \cdot j + l \end{pmatrix} + Front_{(i,j)}(m), \frac{1}{2}\right] - P'\left[\begin{pmatrix} S_x \cdot i + k \\ S_y \cdot j + l \end{pmatrix} - Rear_{(i,j)}(m), 0\right] \right|$$

où $S_x$ et $S_y$ représentent les tailles en pixels en abscisse et en ordonnée d'un soubloc.

Le vecteur du sous-bloc sera le vecteur donnant une erreur minimale. En balayant tous les sous-blocs, on obtient un champ de vecteurs noté Raw(i,j).

Selon une variante de réalisation, les composantes des vecteurs de ce champ sont soumises à un filtrage médian pour éliminer les valeurs aberrantes: en effet, une petite erreur sur un sous-bloc est moins visible qu'une hétérogénéité locale du champ de vecteurs.

Soient:

$a = (1\ 0) \cdot Raw_{(i-1,j)}$; $a' = (0\ 1) \cdot Raw_{(i-1,j)}$

$b = (1\ 0) \cdot Raw_{(i,j)}$; $b' = (0\ 1) \cdot Raw_{(i,j)}$

$c = (1\ 0) \cdot Raw_{(i+1,j)}$; $c' = (0\ 1) \cdot Raw_{(i+1,j)}$

Le champ de vecteurs s'écrit alors

$$SB_2(i,j) = \begin{pmatrix} med(a,b,c) \\ med(a',b',c') \end{pmatrix}.$$

La filtrage médian est donc réalisé, pour un sous-bloc donné, en tenant compte du vecteur précédemment calculé pour ce sous-bloc et des vecteurs des sous-blocs horizontalement adjacents.

On obtient donc un champ de vecteurs pour des sous-blocs de 4*4 pixels.

On définit également pour chaque sous-bloc l'erreur associée au vecteur choisi. Cette erreur est une mesure de la confiance accordée à chaque vecteur de mouvement. L'erreur s'écrit:

$$Err_2(i,j) = \sum_{\substack{k=0,1,2,3 \\ l=0,2}} \left| P'\left[\begin{pmatrix} S_x \cdot i + k \\ S_y \cdot j + l \end{pmatrix} + Front(i,j), \frac{1}{2}\right] - P'\left[\begin{pmatrix} S_x \cdot i + k \\ S_y \cdot j + l \end{pmatrix} - Rear(i,j), 0\right] \right|$$

Trame 3

Comme cela a été fait pour la trame 2, un calcul de vecteurs au niveau des sous-blocs est entrepris pour la trame 3, en estimant le mouvement entre les trames 2/3 et 4. Cependant, le calcul est différent de celui précédemment mis en oeuvre. En effet, selon le présent exemple de réalisation, on ne calcule pas de vecteurs de mouvement pour des blocs principaux entre les trames 2/3 et 4, ceci pour des raisons d'économie de lignes à retard. En effet, s'il fallait calculer pour la trame 3 à la fois les vecteurs des blocs principaux et ceux des sous-blocs adjacents, il faudrait, pour un sous-bloc donné, avoir calculé les vecteurs des tous les blocs principaux adjacents, et cela introduirait un retard correspondant approximativement au nombre de lignes contenu dans une rangée de blocs principaux..

Les vecteurs des sous-blocs pour la trame 3 seront calculés à partir du champ de vecteurs précédemment calculé pour les blocs principaux entre les trames 1 et 2/3. Ceci pose des problèmes en cas de mouvements rapides, étant donné que les vecteurs des sous-blocs seront alors calculés à partir de vecteurs ne reflétant plus le mouvement réel.

Selon le présent exemple de réalisation, on rafraîchit les informations concernant les blocs principaux en créant un champ de vecteurs pour des blocs dits bloc intermédiaires, dont la taille est, justement, intermédiaire entre celle d'un bloc principal et celle d'un sous-bloc.

Selon le présent exemple de réalisation, les blocs intermédiaires ont une taille de 32 pixels par 4 lignes: ils ont la largeur d'un bloc principal et la hauteur d'un sous-bloc. On calcule, à partir des trames 2/3 et 4 et du champ de vecteurs des blocs principaux déterminé pour les trames 1 et 2/3, le champ de vecteurs à résolution spatiale moyenne associé à ces blocs intermédiaires. On en déduira dans un second temps le champ de vecteurs des sous-blocs. L'on voit que si le champ de vecteurs déterminé entre les trames 1 et 2/3 est pris comme source de vecteurs candidats, les calculs d'erreur seront néanmoins effectués à partir de l'information des trames 2/3 et 4.

De même que pour les sous-blocs de la trame 2, on considère que les calculs sont effectués pour des blocs intermédiaires appartenant à la trame de sortie, à savoir la trame 3. Comme précédemment, on sera amené à décomposer les vecteurs de mouvement à appliquer aux blocs intermédiaires en deux vecteurs. Ainsi, pour un vecteur (u, v), on déterminera deux vecteurs *Front* et *Rear* comme suit:

$$\text{Front}=\frac{2}{3}(u,v)$$

$$\text{Rear} =(u,v)\text{-Front}$$

L'erreur associée au vecteur de mouvement (u,v) pour un block intermédiaire (i,j) s'écrira:

$$\text{Err}_{\text{Intermediate}}(i,j) = \sum_{\substack{k=0,2...30 \\ l=0,2}} \left| P'\left[ \begin{pmatrix} M_x \cdot i+k \\ S_y \cdot j+l \end{pmatrix} + \text{Front}(i,j), \tfrac{1}{2} \right] - P'\left[ \begin{pmatrix} M_x \cdot i+k \\ S_y \cdot j+l \end{pmatrix} - \text{Rear}(i,j), 1 \right] \right|$$

Pour un bloc intermédiaire donné de la trame 3, on détermine le bloc principal qui lui correspond: c'est le bloc principal qui, projeté orthogonalement sur la trame 3, contient ce bloc intermédiaire.

On détermine un certain nombre de vecteurs candidats pour un bloc intermédiaire (i,j) donné:

- le vecteur du bloc principal correspondant,
- le vecteur déduit du vecteur du bloc principal ci-dessus en modifiant sa composante horizontale d'un pas de quantification dans le sens positif,
- le vecteur déduit du bloc principal ci-dessus en modifiant sa composante horizontale d'un pas de quantification dans le sens négatif,
- le vecteur du bloc principal le plus proche (au-dessus ou en-dessous) du bloc intermédiaire,
- le vecteur déduit du bloc principal ci-dessus en modifiant sa composante horizontale d'un pas de quantification dans le sens positif,
- le vecteur déduit du bloc principal ci-dessus en modifiant sa composante horizontale d'un pas de quantification dans le sens négatif.

Selon le présent exemple de réalisation, les six vecteurs candidats seront donc:

$$\text{Si } j\bmod 4 < 2 \text{ alors } j'=-1 \text{ sinon } j' = 1$$

$$\text{Rel}^{\text{IB}}_{(i,j)}(1)=\text{MB}(i,j\vee 4)$$

$$\text{Rel}^{\text{IB}}_{(i,j)}(2) = \text{MB}(i,j\vee 4)+\begin{pmatrix} 2 \\ 0 \end{pmatrix}$$

$$\text{Rel}^{IB}_{(i,j)}(3) = MB(i, j \vee 4) + \begin{pmatrix} -2 \\ 0 \end{pmatrix}$$

$$\text{Rel}^{IB}_{(i,j)}(4) = MB(i, j \vee 4 + j')$$

$$\text{Rel}^{IB}_{(i,j)}(5) = MB(i, j \vee 4 + j') + \begin{pmatrix} 2 \\ 0 \end{pmatrix}$$

$$\text{Rel}^{IB}_{(i,j)}(6) = MB(i, j \vee 4 + j') + \begin{pmatrix} -2 \\ 0 \end{pmatrix}$$

où le quotient de la division euclidienne de a par b est noté a$\vee$b et son reste amodb.

Les second et troisième vecteurs ont même composante verticale que le premier vecteur, les composantes horizontales étant modifiées. De même, les cinquième et sixième vecteurs ont la même composante verticale que le quatrième vecteur, les composantes horizontales étant modifiées. Ce choix est dû à la taille des blocs intermédiaires, qui n'ont que deux lignes de hauteur.. Si on avait choisi des blocs intermédiaires de taille verticale plus importante, il aurait été envisageable d'effectuer une correction de la composante verticale. Mais ici, avec seulement deux lignes par bloc intermédiaire, il est difficile de déterminer de manière fiable une composante verticale et donc à fortiori de la corriger.

On calcule alors l'erreur associée à chacun des six vecteurs, et ce pour chaque bloc intermédiaire. Le vecteur retenu pour un bloc intermédiaire parmi les six vecteurs candidats est celui donnant l'erreur minimale.

Selon une variante de réalisation, on supprime la correction sur les composantes horizontales.. Ceci permet d'éviter d'engendrer de trop fortes discontinuités dans le champ de vecteurs en cas d'images bruitées.

On obtient finalement un champ de vecteurs à résolution spatiale moyenne note IB(i,j).

La dernière étape de l'estimation de mouvement de la trame 3 consiste à déterminer un champ de vecteurs de niveau sous-bloc à partir du champ de vecteurs aux blocs intermédiaires. On attribuera naturellement un sous-bloc au bloc intermédiaire dont il fait partie. Selon le présent exemple, deux vecteurs candidats sont déterminés pour chaque sous-bloc: le premier vecteur candidat est celui du bloc intermédiaire dont fait partie le sous-bloc, tandis que le second vecteur est celui du bloc intermédiaire adjacent tel que défini ci-dessous.

Pour un sous-bloc de coordonnées (i,j), les deux vecteurs candidats seront:

$$\text{Si } i \bmod 8 < 4 \text{ alors } i' = -1 \text{ sinon } i' = 1$$

$$\text{Rel}_{(i,j)}(1) = IB(i \vee 8, j \vee 4)$$

$$\text{Rel}_{(i,j)}(2) = IB(i \vee 8 + i', j \vee 4)$$

On calculera donc les vecteurs:

Pour m=1,2

$$\text{Front}_{(i,j)}(m) = \text{int}\left( \frac{2}{3} \cdot \text{Rel}_{(i,j)}(m) \right)$$

$$\text{Rear}_{(i,j)}(m) = \text{Rel}_{(i,j)}(m) - \text{Front}_{(i,j)}(m)$$

Puis les erreurs:

Pour m= 1,2

$$Err_{(i,j)}(m) = \sum_{\substack{k=0,2 \\ l=0,2}} \left| P'\left[ \begin{pmatrix} S_x \cdot i+k \\ S_y \cdot j+l \end{pmatrix} + Front_{(i,j)}(m), 1 \right] - P'\left[ \begin{pmatrix} S_x \cdot i+k \\ S_y \cdot j+l \end{pmatrix} - Rear_{(i,j)}(m), \frac{1}{2} \right] \right|$$

Le vecteur donnant la plus petite erreur sera retenu.

On procède également à un filtrage médian du champ de vecteurs $(SB_3(i,j))$ obtenu, et on calculera le champ d'erreurs $(Err_3(i,j))$ correspondant.

Réduction de bruit

La réduction du bruit comprend deux étapes:

- une réduction de bruit spatiale,
- une réduction de bruit temporelle compensée en mouvement.

La première étape fait appel à l'information contenue dans une seule trame, tandis que la seconde étape fait appel à l'information contenue dans plusieurs, en l'occurrence deux, trames successives.

Dans ce qui suit, seul le filtrage de la luminance sera décrit.

Dans le cadre du présent exemple, le filtrage spatial de la chrominance n'est pas considéré comme nécessaire, les échantillons de chrominance étant trop éloignés les uns des autres pour que le filtre, médian de type directionnel ait un sens. Il est bien évident que la chrominance pourra également être filtrée, notamment si l'information de chrominance est plus dense, notamment si elle avait une résolution identique à celle de la luminance.

Le filtrage temporel de la chrominance se déduit directement de celui de la luminance en considérant des trames d'entrée dont la taille est divisée par le facteur de sous-échantillonnage de la chrominance, (soit par 2 dans la direction des abscisses x pour un format d'entrée 4:2:2). Il faut également diviser la composante x des vecteurs de mouvement par ce même facteur.

Réduction de bruit spatiale

La réduction spatiale de bruit est destinée à réduire le bruit impulsionnel dans les trames d'entrée.

Selon le présent exemple de réalisation, le filtre spatial est un filtre médian directionnel, qui possède l'avantage de ne pas dégrader les fronts et les textures fines d'une image. Un simple filtrage linéaire ou médian n'aurait pas cet avantage.

Le filtrage médian directionnel est réalisé ici sur trois pixels: le pixel "courant", ainsi que deux pixels adjacents situés sur une même droite passant par le pixel courant. Compte tenu de ces restrictions, quatre directions de filtrage sont possibles: horizontale, verticale et deux diagonales.

Le choix de la direction à considérer est fait en fonction de la corrélation existant entre les trois pixels d'une même direction.

Le tableau suivant représente le pixel courant (X22) entouré de ses pixels adjacents:

| x11 | x12 | x13 |
|-----|-----|-----|
| x21 | x22 | x23 |
| x31 | x32 | x33 |

La direction horizontale (appelée d1) passe par les pixels X21, X22 et X23.

La direction verticale (appelée d2) passe par les pixels X12, X22 et X32.

La première direction diagonale (d3) passe par les pixels X31, X22 et X13.

La seconde direction diagonale (d4) passe par les pixels X11, X22 et X23.

Les coefficients de correlation associés à chacune des directions sont respectivement notées c1 à c4 et les valeurs filtrées m1 à m4.

Selon d1:

$$c1 = \min(|x21 - x22|, |x23 - x22|)$$

$$m1 = \text{med}(x21, x22, x23)$$

Selon d2:

$$c2 = \min(|x12 - x22|, |x32 - x22|)$$

$$m2 = \text{med}(x12, x22, x32)$$

Selon d3:

$$c3 = \min(|x13 - x22|, |x31 - x22|)$$

$$m3 = \text{med}(x13, x22, x31)$$

Selon d4:

$$c4 = \min(|x11 - x22|, |x33 - x22|)$$

$$m4 = \text{med}(x11, x22, x33)$$

La direction pour laquelle le coefficient de corrélation est le plus faible sera retenue.

D'autres fonctions de corrélation peuvent également être choisies. De même, le filtrage peut être réalisé sur plus de trois pixels ou dans plus de trois directions, si la fenêtre utilisée le permet.

Réduction de bruit temporelle compensée en mouvement

Un intérêt non négligeable de l'estimation de mouvement est qu'elle permet l'application de procédés de réduction de bruit compensés en mouvement.

On part de l'hypothèse que le bruit perturbant une image de télévision est sensiblement d'espérance mathématique nulle, c'est à dire que sa moyenne temporelle sur plusieurs images tend vers zéro. On peut donc réduire les composantes à haute fréquence de ce bruit en réalisant un filtrage passe-bas temporel de l'image.

Un procédé de filtrage connu consiste à réaliser un filtrage numérique récurrent pixel à pixel. Ce procédé comprend la mémorisation, pour chaque pixel, d'un certain nombre d'échantillons, et l'application d'une relation de récurrence entre ces valeurs mémorisées et un pixel courant. On peut ainsi déterminer une valeur filtrée pour ce pixel courant, ainsi que mettre à jour les valeurs mémorisées. Le choix de la relation de récurrence et le nombre de termes mémorisés déterminent l'efficacité du filtre.

Cependant, l'application d'un filtre passe-bas temporel à une séquence d'images de télévision possède un défaut majeur: elle engendre par la nature même de ce filtrage une traînée suivant tous les objets mobiles, ce phénomène étant similaire à ce qu'on l'on pourrait voir sur un tube cathodique à forte rémanence. Cet effet est très visible sur certains téléviseurs commercialisés.

Selon le présent exemple de réalisation, cet effet est atténué en utilisant les vecteurs de mouvement déjà calculés lors de la mise en oeuvre de la relation de récurrence. La récurrence sera réalisée non pas sur des pixels de coordonnées fixes, mais sur des pixels translatés par les vecteurs de mouvement. En d'autres termes, on suit le déplacement des objets pour faire correspondre des pixels images d'un même point de l'objet mobile.

Dans le cadre du présent exemple, la réduction de bruit temporelle est réalisée grâce à une unique mémoire de trame sur les trames d'entrée (filtrées spatialement). On mettra en oeuvre le champ de vecteurs à précision maximale, à savoir le champ de vecteurs des sous-blocs. On commencera donc par calculer les vecteurs à partir de la trame mémorisée et de la trame d'entrée non réduite en bruit. Le champ de vecteurs ainsi obtenu sera utilisé pour réduire en bruit la trame d'entrée. L'interpolation sera réalisée entre la trame d'entrée ainsi traitée et entre la trame mémorisée: les deux trames servant à l'interpolation auront donc subi une réduction du bruit.

Dans le cadre du présent exemple, une seule mémoire de trame est utilisée: on ne retient pour chaque pixel qu'un seul échantillon dans le passé. La récurrence portera donc sur deux termes: le pixel "courant" et un échantillon mémorisé.

La réduction de bruit s'articule en deux parties:

- Mise en correspondance des pixels sur lesquels va porter la relation de récurrence.
- Application de la relation de récurrence.

La mise en correspondance des pixels est réalisée sous-bloc par sous-bloc de la trame d'entrée. On met en correspondance les pixels d'un sous-bloc de la trame d'entrée et les pixels du sous-bloc désigné par le vecteur de mouvement correspondant dans la trame mémorisée. On réalise donc une projection de la trame mémorisée suivant le champ de vecteurs de mouvement.

Si l'on désigne la luminance de la trame d'entrée par 1

$$P\left[\begin{pmatrix} x \\ y \end{pmatrix}, t\right],$$

celle de la trame réduite en bruit contenue dans la mémoire par

$$\tilde{P}\left[\begin{pmatrix} x \\ y \end{pmatrix}, t\right]$$

et celle de la trame projetée par

$$\hat{P}\left[\begin{pmatrix} x \\ y \end{pmatrix}, t\right],$$

cette dernière s'écrit, pour la trame 2/3:

$$\forall x \; \varepsilon \{0,1,...,720\}$$

$$\forall y \; \varepsilon \{1,3,5,...,575\}$$

$$\hat{P}_{2/3}\left[\begin{pmatrix} x \\ y \end{pmatrix}, \frac{1}{2}\right] = \tilde{P}_1\left[\begin{pmatrix} x \\ y \end{pmatrix} - SB_2(i,j), 0\right]$$

avec

i = xmod4
j = ymod4

Et pour la trame 4:

$$\forall x \; \varepsilon\{0,1,...,720\}$$

$$\forall y \; \varepsilon\{0,2,4,...,574\}$$

$$\hat{P}_4\left[\begin{pmatrix}x\\y\end{pmatrix},1\right]=\tilde{P}_{2/3}\left[\begin{pmatrix}x\\y\end{pmatrix}-SB_3^{(i,j)},\frac{1}{2}\right]$$

avec

i = xmod4
j = ymod4

Il s'agit maintenant de définir et d'appliquer une relation de récurrence. Elle portera comme indiqué plus haut sur

$$\hat{P}\left[\begin{pmatrix}x\\y\end{pmatrix},t\right]$$

et

$$P\left[\begin{pmatrix}x\\y\end{pmatrix},t\right]$$

et donnera

$$\tilde{P}\left[\begin{pmatrix}x\\y\end{pmatrix},t\right].$$

A supposer que l'aspect d'un objet change peu d'une trame à l'autre, et en tout cas lentement par rapport à la constante de temps du filtre, les différences de luminosité ne sont dues qu'au bruit. Dans le cadre du présent exemple, la relation de récurrence utilisée est donc:

$$\tilde{P}\left[\begin{pmatrix}x\\y\end{pmatrix},t\right]=P\left[\begin{pmatrix}x\\y\end{pmatrix},t\right]+f\left(\hat{P}\left[\begin{pmatrix}x\\y\end{pmatrix},t\right]-P\left[\begin{pmatrix}x\\y\end{pmatrix},t\right]\right)$$

.

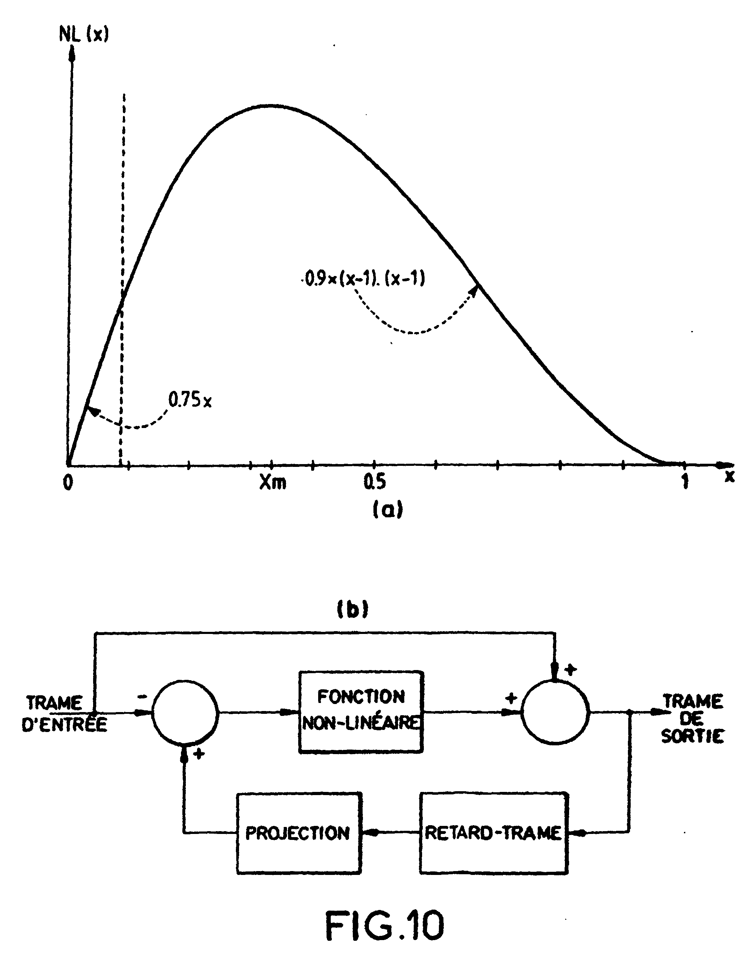

où **f** est une fonction non-linéaire adaptée au bruit, issue de la fonction non linéaire **NL** représentée sur la figure 10 (a), avec le schéma du filtre récurrent utilisé (Figure 10 (b)). Cette fonction possède une partie linéaire au début de sa courbe: pour de faibles différences entre l'image reçue et sa projection, la correction est maximale et le pixel de sortie est interpolé linéairement, avec un facteur ¾ pour la projection et ¼ pour le pixel reçu. Si la différence croît, la probabilité d'effacer une transition réelle dans l'image croît aussi, et on choisit de privilégier le pixel reçu, jusqu'à ne plus tenir compte du tout de l'estimation si l'écart est trop important.
Selon le présent exemple de réalisation, on adapte cette fonction à la variance du bruit estimé au moment du calcul des vecteurs de mouvement: on arrive ainsi à faire la différence entre le bruit à réduire et l'information à sauvegarder.

NL s'écrit alors:

$$NL{:}R^{+} \rightarrow R$$

$$x \mapsto NL(x)$$

$$\forall 0 \leq x \leq 1{:}NL(x) = \min\left(\frac{3}{4}x, \frac{9}{10}x \cdot (x-1)^2\right)$$

$$\forall x > 1{:}NL(x) = 0,$$

alors **f** est la fonction impaire de **R** dans **R** définie sur **R⁺** par:

$$f(x) = \frac{2s}{x_M} NL\left(\frac{x}{2s} \cdot x_M\right)$$

où **s** est l'écart- type du bruit mesuré par ralgorithme et
$x_M$ le maximum local de la fonction **NL**.

On posera:

s = Noiseest

Selon une variante de réalisation du présent exemple, la réduction de bruit temporelle n'est pas effectuée lorsque la confiance dans un vecteur de mouvement est trop faible par rapport au bruit de l'image.

Selon une autre variante de réalisation, on réalise un filtrage spatial de la trame mémorisée avant la projection suivant le champ de vecteurs de mouvement. En effet, étant donné le sous-échantillonnage effectué avant l'estimation de mouvement, la précision des vecteurs de mouvement, et par conséquent de la projection est de deux pixels. Les détails plus fins sont éliminés par l'intermédiaire d'un filtre passe-bas linéaire. Des mesures ont montré qu'un filtrage passe-bas abaisse le niveau de bruit d'environ 2 dB supplémentaires.

Interpolation

Après avoir obtenu pour chaque trame à interpoler un champ de vecteurs le plus exact possible, il s'agit désormais de déduire de cette information et des trames d'entrée les trames que l'on va afficher. Selon la trame prise en considération, on ne visera pas les mêmes objectifs.

On se tiendra notamment aux lignes de conduite suivantes:

- on tentera de garder une homogénéité dans les différentes procédures d'interpolation adaptées à chaque trame: une différence trop brutale entre deux types d'interpolation conduit à des différences d'aspect d'une trame sur l'autre qui, répétées 75 fois par seconde, engendrent un scintillement plus gênant que celui que l'on cherche à réduire;
- on prendra les mesures nécessaires pour qu'une erreur sur un vecteur de mouvement, même importante en valeur mais suffisamment localisée, ou une différence entre le champ de vecteurs réel et celui mesuré due par exemple à la quantification, ne crée pas de perturbation trop visible. De plus, la présence de bruit dans l'image ne doit pas mettre en échec le procédé d'interpolation.

Interpolation de la trame 1 (luminance)

La trame 1 est un cas particulier, en ce sens que ses lignes paires sont reprises telles quelles. Il faut cependant reconstituer les lignes impaires.

On notera $P_1(x,y)$ avec ($0 \leq x \leq 719; 0 \leq y \leq 575$) la luminance d'un pixel de la trame 1.

Selon le présent exemple de réalisation plusieurs types d'interpolation sont mis en oeuvre pour reconstituer les lignes manquantes:

- interpolation linéaire verticale par moyennage (filtrage spatial pur)
- entrelacement des trames 1 et 3 dans les zones immobiles (filtrage temporel pur).
- interpolation mettant en oeuvre les vecteurs de mouvement (filtrage spatio-temporel)

Le choix du type d'interpolation est fait bloc principal par bloc principal en fonction de critères liés au vecteur et à l'erreur associée au bloc.

Le vecteur associé à un bloc principal de la trame 1 est celui associé au bloc principal de même position dans la trame 2/3. Bien que l'estimation de mouvement ne soit pas effectuée pour les blocs de la trame 1, mais pour les blocs de la trame 2/3, on prend néanmoins en considération ces vecteurs. En effet, si l'on s'éloigne des bords des objets en mouvement et si le mouvement est régulier, les vecteurs obtenus par estimation directe sur les blocs de la trame 1 seraient similaires aux vecteurs calculés pour la trame 2/3.

L'interpolation linéaire verticale (filtrage spatial pur) est une solution de repli utilisée lorsque la confiance dans le vecteur de mouvement détecté est trop faible. Pour le présent mode de réalisation, on utilise l'interpolation:

$$P_1[(x,y)] = \frac{1}{2}\left( P\left[\begin{pmatrix} x \\ y-1 \end{pmatrix}, 0\right] + P\left[\begin{pmatrix} x \\ y+1 \end{pmatrix}, 0\right]\right)$$

Le moyennage vertical a l'inconvénient de faire apparaître des "escaliers" très visibles sur les lignes diagonales. De plus, il donne une définition médiocre, égale tout au plus à celle d'un téléviseur conventionnel. Enfin, il crée nécessairement un scintillement de ligne puisqu'on ne peut interpoler les trames 2 et 3 de cette manière. On cherchera donc à éviter si possible le moyennage vertical.

Ce filtrage spatial pur est mis en oeuvre à l'intérieur du filtre spatio-temporel décrit plus loin.

Si le vecteur de mouvement associé à un bloc principal est nul, on réalise un filtrage dit filtrage temporel pur, en ce sens que les lignes manquantes de la trame 1 sont choisies dans une autre trame. On réalise ainsi un entrelacement des lignes de deux trames. Le critère choisi pour déterminer le caractère statique d'un bloc principal est la comparaison de l'erreur de l'estimation de mouvement par rapport à un seuil. Si l'erreur est inférieure à ce seuil, alors le bloc est jugé statique. En effet, si seulement une partie du bloc est statique, l'autre partie engendrera néanmoins une erreur importante.

Le critère s'écrit:

$$\text{MBError}(i,j) < \text{Seuil} \times \text{Noisest}$$

et le pixel interpolé s'écrira:

pour y pair:

$$P(x,y) = P(x,y,0)$$

pour y impair

$$P_1(x,y) = P\left(x, y, \frac{1}{2}\right)$$

Ce type d'interpolation permet, par rapport à l'interpolation de type verticale par moyenne, de permettre une définition verticale double et de supprimer le scintillement de ligne.

Si le vecteur de mouvement est non nul ou si le vecteur de mouvement est nul, mais que le critère portant sur l'erreur associée précédemment défini n'est pas rempli, alors un filtrage spatio-temporel est utilisé pour l'interpolation. Dans le cadre du présent exemple, il s'agit d'un filtrage de type médian.

Un filtre de type médian permet de conserver une bonne définition et de respecter les fronts de l'image, contrairement aux filtres purement linéaires.

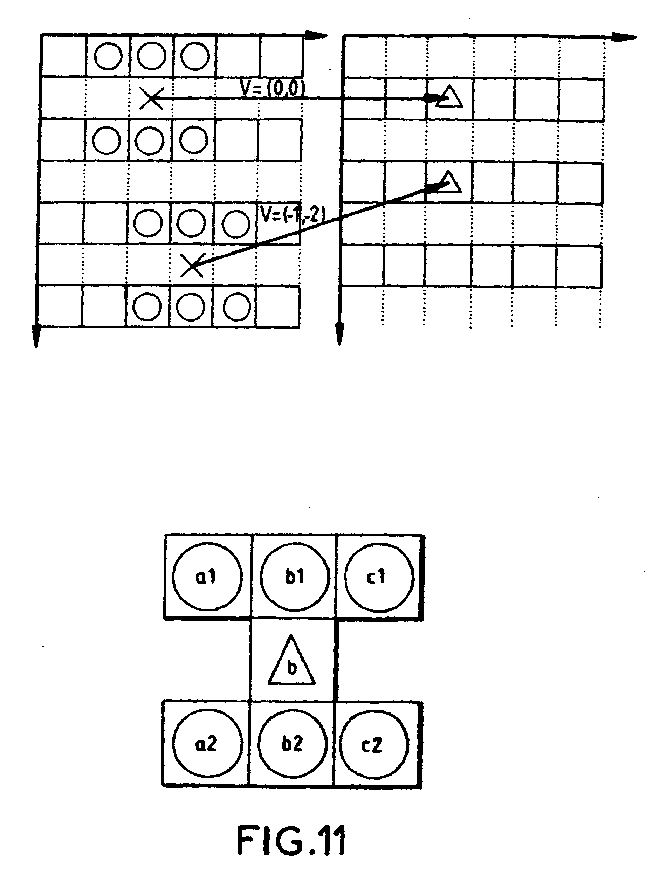

La figure 11 illustre ce type d'interpolation. Sur cette figure, un "X" désigne le pixel à interpoler, un rond désigne un pixel de la trame 1 et un triangle un pixel de la trame 2/3.

La valeur d'un pixel interpolé est déterminée en deux temps:

- dans un premier temps, on détermine trois valeurs correspondant à trois filtres F1, F2 et F3,

  F1 réalise une moyenne des valeurs du pixel (b1) situé au dessus du pixel à interpoler et du pixel (b2) situé en dessous du pixel à interpoler,
  F2 donne la valeur médiane entre b1, b2 et la valeur du pixel (b) de la trame 2/3 correspondant à la translation par le vecteur de mouvement approprié du pixel à interpoler de la trame 1,
  F3 donne la valeur médiane parmi la valeur du pixel b et des valeurs des quatre pixels diagonalement adjacents (a1, c1, a2, c2) au pixel à interpoler,

- dans un second temps, on détermine la valeur médiane parmi les trois valeurs données par ces filtres.

Soit **MB(i,j)** le vecteur du bloc principal dont fait partie le pixel que l'on cherche à interpoler. Soient

$$v_x = (1 \ 0) \cdot MB(i,j)$$

$$v_y = (0 \ 1) \cdot MB(i,j)$$

Pour y pair:

$$P_1(x,y) = P\left[\begin{pmatrix} x \\ y \end{pmatrix}, 0\right]$$

Pour y impair

$$F1(x,y) = \frac{1}{2}\left(P\left[\begin{pmatrix} x \\ y-1 \end{pmatrix}, 0\right] + P\left[\begin{pmatrix} x \\ y+1 \end{pmatrix}, 0\right]\right)$$

$$F2(x,y) = med3\left(P\left[\begin{pmatrix} x \\ y-1 \end{pmatrix}, 0\right]; P\left[\begin{pmatrix} x \\ y+1 \end{pmatrix}, 0\right]; P\left[\begin{pmatrix} x+v_x \\ y+v_y \end{pmatrix}, \frac{1}{2}\right]\right)$$

$$F3(x,y) = med5\left(P\left[\begin{pmatrix} x-1 \\ y-1 \end{pmatrix}, 0\right]; P\left[\begin{pmatrix} x-1 \\ y+1 \end{pmatrix}, 0\right]; P\left[\begin{pmatrix} x+1 \\ y-1 \end{pmatrix}, 0\right]; P\left[\begin{pmatrix} x+1 \\ y+1 \end{pmatrix}, 0\right]; P\left[\begin{pmatrix} x+v_x \\ y+v_y \end{pmatrix}, \frac{1}{2}\right]\right)$$

Finalement

$$P_1(x,y) = \text{med3}(F1(x,y);F2(x,y);F3(x,y))$$

On construit ainsi un filtre portant sur sept valeurs de pixels, dont un seul n'appartient pas à la trame courante. Les effets dus à une mauvaise estimation de mouvement sont ainsi atténués.

D'autre part, la définition sera bien conservée et les contours des objets bien suivis de par le filtrage médian directionnel qui agit à la fois dans les directions verticale et diagonales.

<u>Interpolation de la trame 2 (luminance)</u>

L'interpolation de la trame 2 s'effectue à partir du champ de vecteurs au niveau des sous-blocs. Tous les pixels de la trame doivent être interpolés, puisqu'elle ne se confond pas temporellement avec une trame d'entrée, comme cela est le cas pour la trame 1.

Par souci d'homogénéité, les mécanismes d'interpolation utilisés pour la trame 2 possèdent des caractéristiques semblables à ceux déjà employés pour la trame 1.

On procède donc sous-bloc par sous-bloc.

De la même manière que pour la trame 1, si l'erreur liée au vecteur de mouvement d'un sous-bloc est importante, l'interpolation est réalisée avec le filtre spatio-temporel déjà utilisé pour la trame 1. Cependant, la trame 2 étant située temporellement entre la trame 1 et la trame 2/3, le vecteur de mouvement entre les trames 1 et 2/3 est séparé en deux vecteurs, l'un (Front vector) indiquant le mouvement entre la trame 1 et la trame 2, l'autre indiquant le mouvement entre la trame 2 et la trame 2/3. Chacun de ces deux vecteurs est arrondi à une valeur entière. On rappelle qu'une décomposition identique en deux vecteurs d'un vecteur de mouvement a été utilisée lors du calcul des vecteurs de mouvement associés aux sous-blocs de la trame 2. Les arrondis seront effectués de la même manière dans les deux cas, pour éviter d'ajouter des erreurs.

Si (i,,j) représente les coordonnées du sous-bloc contenant le pixel à interpoler, on calculera les vecteurs:

$$\text{Rear}(i,j) = \text{int}[\tfrac{2}{3} . SB_2(i,j)]$$

$$\text{Front}(i,j) = SB_2(i,j) - \text{Rear}(i,j)$$

On détermine ensuite trois valeurs préliminaires (a, b, c). Le calcul diffère selon que le pixel à interpoler est situé dans une ligne paire ou impaire.

Pour y pair, soient

$$a = P\left[\begin{pmatrix} x \\ y-1 \end{pmatrix} + \text{Front}(i,j), \frac{1}{2}\right]$$

$$b = P\left[\begin{pmatrix} x \\ y \end{pmatrix} - \text{Rear}(i,j), O\right]$$

$$c = P\left[\begin{pmatrix} x \\ y+1 \end{pmatrix} + \text{Front}(i,j), \frac{1}{2}\right]$$

alors:

$$P_2(x,y) = med3\left(\frac{(2\,{}^*a+b)}{3};med3(a,b,c);\frac{(2\,{}^*c+b)}{3}\right)$$

Pour y impair, on pose de même:

$$a = P\left[\binom{x}{y-1} - Rear(i,j), 0\right]$$

$$b = P\left[\binom{x}{y} + Front(i,j), \frac{1}{2}\right]$$

$$c = P\left[\binom{x}{y+1} - Rear(i,j), 0\right]$$

alors:

$$P_2(x,y) = med3\left(\frac{(a+2\,{}^*b)}{3};med3(a,b,c);\frac{(c+2\,{}^*b)}{3}\right)$$

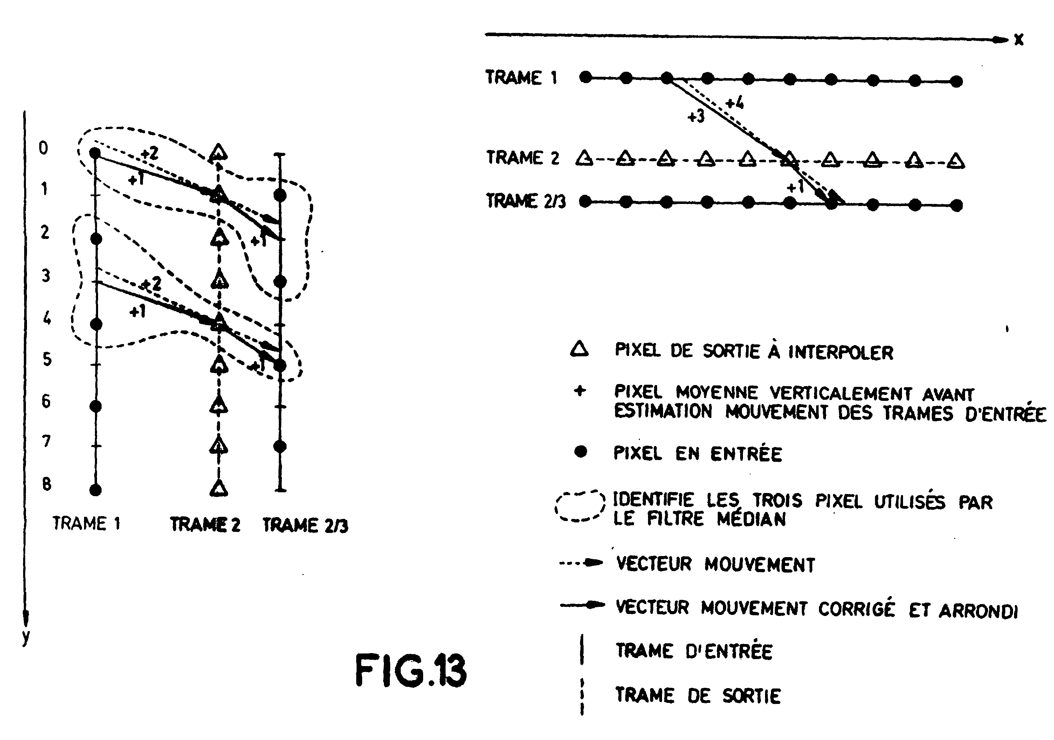

Ce filtrage est illustré par la figure 13.

$P_2(x,y)$ est la valeur du pixel interpolé et correspond à la valeur médiane parmi trois valeurs: les résultats de deux filtres linéaires et d'un filtre médian à partir des valeurs des pixels a, b et c.

Les deux filtres linéaires réalisent une interpolation temporelle avec des coefficients de pondération correspondant aux positions relatives du pixel à interpoler par rapport aux pixels a, b, c. Il faut noter que ce sont deux filtres temporels purs, c'est à dire n'utilisant qu'un seul pixel dans chacune des trames d'entrée. Ceci permet d'éviter une perte de résolution verticale.

Le filtre médian permet également de conserver à la trame générée une bonne résolution spatiale. Mais il permet aussi de garder une certaine homogénéité entre les différents mécanismes d'interpolation des trois trames.

Si le vecteur de mouvement lié à un sous-bloc est nul ou si la confiance accordée à un vecteur est bonne (erreur faible), l'interpolation sera, comme dans le cas de la trame 1, de type interpolation temporelle pure: on entrelace les lignes des trames 1 et 2/3:

Pour y pair:

$$P'2(x,y) = P(x,y,0)$$

Pour y impair

$$P'2(x,y) = P\left(x,y,\frac{1}{2}\right)$$

On calcule d'autre part une seconde valeur possible pour ce pixel, appelée valeur de repli. Cette valeur, notée $Fallback_2(x,y)$, correspond à un filtrage linéaire coupant très sévèrement les hautes fréquences spatiales sur les deux trames concernées:

$$Fallback2(x,y) = \frac{1}{16}(1 \quad 2 \quad 3 \quad 4 \quad 3 \quad 2 \quad 1) \left[ \frac{1}{3}\begin{pmatrix} P(x-3,y,0) \\ P(x-2,y,0) \\ P(x-1,y,0) \\ P(x,y,0) \\ P(x+1,y,0) \\ P(x+2,y,0) \\ P(x+3,y,0) \end{pmatrix} + \frac{2}{3}\begin{pmatrix} P(x-3,y,\frac{1}{2}) \\ P(x-2,y,\frac{1}{2}) \\ P(x-1,y,\frac{1}{2}) \\ P(x,y,\frac{1}{2}) \\ P(x+1,y,\frac{1}{2}) \\ P(x+2,y,\frac{1}{2}) \\ P(x+3,y,\frac{1}{2}) \end{pmatrix} \right]$$

On définit également la confiance portée à un vecteur de mouvement comme:

$$Conf(x,y) = \frac{Error_2\,(x,\,y)}{NBPixel}$$

où NBPixel représente le nombre de pixels contenus dans un sous-bloc sous-échantillonné. Conf(x,y) représente l'erreur ramenée à un pixel.

La valeur $P_2(x,y)$ du pixel interpolé sera alors:

$$P_2(x,y) = med3\left( P'_2(x,y) - \frac{Conf(x,y)}{Scale}, Fallback(x,y), P'_2(x,y) + \frac{Conf(x,y)}{Scale} \right)$$

La valeur $P_2(x,y)$ est égale à la valeur du pixel compensé en mouvement mais encadrée de manière à ne pas pouvoir s'écarter de la valeur du pixel de repli d'une valeur supérieure à la confiance divisée par un facteur correctif.

Interpolation de la trame 3 (luminance)

Les mécanismes sont très semblables à ceux employés pour la trame 2. La trame 3 est interpolée à partir des trames 2/3 et 4 (c'est à dire la trame 1 du cycle suivant) et des vecteurs des sous-blocs $SB_3(i,j)$. Seuls les coefficients d'interpolation et les aspects de parité des lignes vont changer.

On calculera donc les vecteurs:

$$Front(i,j) = int\left[ \frac{2}{3} \cdot SB_3(i,j) \right]$$

$$Rear(i,j) = SB_3(i,j) - Front(i,j)$$

et les points seront calculés:

Pour y impair, soient

$$a = P\left[\begin{pmatrix} x \\ y-1 \end{pmatrix} + \text{Front}(i,j), 1\right]$$

$$b = P\left[\begin{pmatrix} x \\ y \end{pmatrix} - \text{Rear}(i,j), \frac{1}{2}\right]$$

$$c = P\left[\begin{pmatrix} x \\ y+1 \end{pmatrix} + \text{Front}(i,j), 1\right]$$

alors:

$$P_3(x,y) = \text{med3}\left(\frac{(a+2*b)}{3}; \text{med3}(a,b,c); \frac{(c+2*b)}{3}\right)$$

Pour y pair, on pose de même:

$$a = P\left[\begin{pmatrix} x \\ y-1 \end{pmatrix} - \text{Rear}(i,j), \frac{1}{2}\right]$$

$$b = P\left[\begin{pmatrix} x \\ y \end{pmatrix} + \text{Front}(i,j), 1\right]$$

$$c = P\left[\begin{pmatrix} x \\ y+1 \end{pmatrix} - \text{Rear}(i,j), \frac{1}{2}\right]$$

alors:

$$P3(x,y) = \text{med3}\left(\frac{(2*a+b)}{3}; \text{med3}(a,b,c); \frac{(2*c+b)}{3}\right)$$

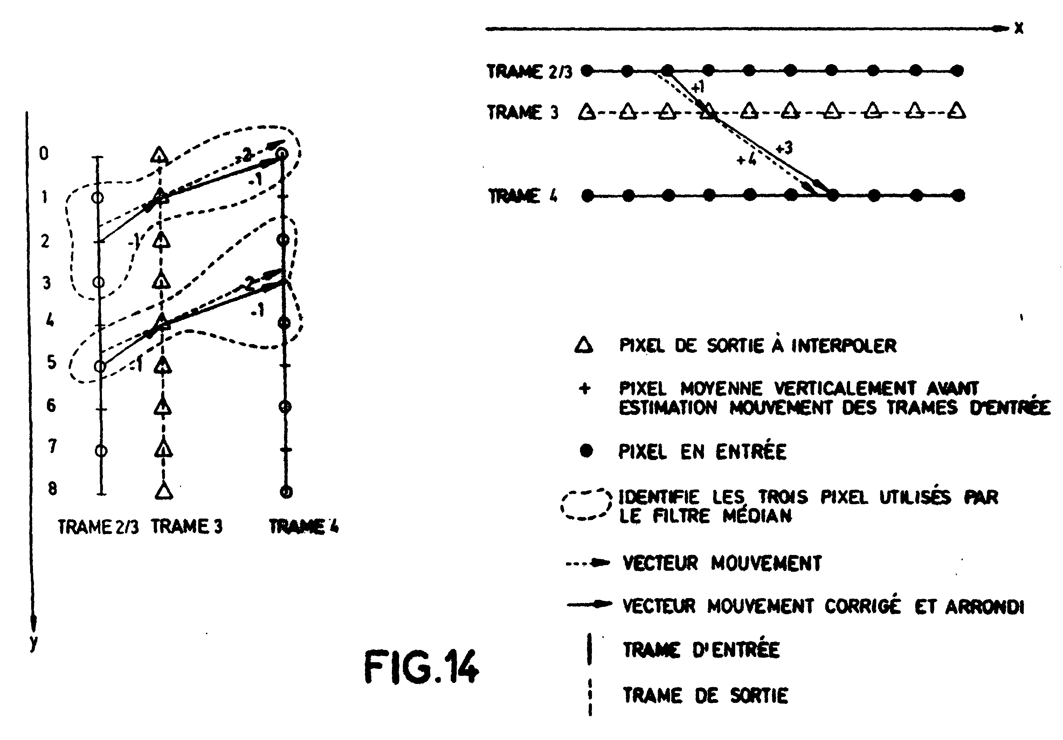

La figure 14 illustre ce filtrage.

Si la confiance est très bonne et le vecteur nul, on optera encore pour une interpolation temporelle pure:

y pair:

$$P_3(x,y) = P(x,y,1)$$

y impair:

$$P_3(x,y) = P\left(x, y, \frac{1}{2}\right)$$

On calculera ensuite le pixel de repli,

$$\text{Fallback3}(x,y) = \frac{1}{16}(1 \quad 2 \quad 3 \quad 4 \quad 3 \quad 2 \quad 1)\left[\frac{2}{3}\begin{pmatrix} P(x-3,y,\frac{1}{2}) \\ P(x-2,y,\frac{1}{2}) \\ P(x-1,y,\frac{1}{2}) \\ P(x,y,\frac{1}{2}) \\ P(x+1,y,\frac{1}{2}) \\ P(x+2,y,\frac{1}{2}) \\ P(x+3,y,\frac{1}{2}) \end{pmatrix} + \frac{1}{3}\begin{pmatrix} P(x-3,y,1) \\ P(x-2,y,1) \\ P(x-1,y,1) \\ P(x,y,1) \\ P(x+1,y,1) \\ P(x+2,y,1) \\ P(x+3,y,1) \end{pmatrix}\right]$$

et la confiance que l'on porte au vecteur de mouvement,

$$\text{Conf}(i,j) = \frac{\text{Error}_3\,(i,\,j)}{\text{NBpixel}}$$

Enfin, on établira la valeur du pixel affiché en interdisant à ce pixel de trop s'écarter de la valeur du pixel de repli si la confiance est mauvaise:

$$P_{3/out}(i,j) = \text{med}\left(P'_3(i,j) - \frac{\text{Conf}(i,j)}{\text{Scale}}, \text{Fallback}_3(i,j), P'_3(i,j) + \frac{\text{Conf}(i,j)}{\text{Scale}}\right)$$

On voit qu'ici, la continuité de l'interpolation est bien assurée avec la trame précédente puisque l'algorithme est calqué sur l'interpolation de la trame 2. Cependant, les vecteurs de sous-blocs ont un biais temporel -dû au fait qu'ils ont été calculés à partir des blocs principaux déterminés pour la trame de sortie précédente- qui rend la définition de cette trame plus mauvaise que celle de la trame précédente, notamment dans le cas de mouvements rapidement évolutifs.

Traitement de la chrominance

L'interpolation de la chrominance est sujette à des contraintes beaucoup moins sévères que celle de la luminance; en effet, la définition de l'oeil est beaucoup plus faible. D'ailleurs, la norme utilisée pour la transmission sur le réseau hertzien, dite format 4:1:1, inclut un sous-échantillonnage aboutissant à transmettre une information de chrominance pour quatre informations de luminance, avec une répétition de l'information de chrominance identique à elle-même sur deux lignes. Les tolérances sur les filtres utilisés sont donc beaucoup plus grandes. De ce fait, nous nous contenterons de filtres simplifiés.

Les algorithmes d'interpolation de la chrominance sont donc directement extrapolés de ceux d'interpolation de la luminance, en considérant des trames contenant deux fois moins de pixels horizontalement, et en divisant donc par deux la composante horizontale des vecteurs de mouvement.

Pour la trame 1, le filtre à 7 pixels d'entrées utilisé en luminance est limité à 3 pixels d'entrée:

Soient

$$v = \frac{1}{2}(1\ 0)\cdot MB(i,j)$$

$$v_y = (0\ 1)\cdot MB(i,j)$$

Pour y pair:

$$P_1(x,y) = P\left[\begin{pmatrix} x \\ y \end{pmatrix}, 0\right]$$

Pour y impair:

$$F1(x,y) = \frac{1}{2}\left(P\left[\begin{pmatrix} x \\ y-1 \end{pmatrix}, 0\right] + P\left[\begin{pmatrix} x \\ y+1 \end{pmatrix}, 0\right]\right)$$

$$F2(x,y) = med3\left(P\left[\begin{pmatrix} x \\ y-1 \end{pmatrix}, 0\right]; P\left[\begin{pmatrix} x \\ y+1 \end{pmatrix}, 0\right]; P\left[\begin{pmatrix} x+v_x \\ y+v_y \end{pmatrix}, \frac{1}{2}\right]\right)$$

$$F3(x,y) = P\left[\begin{pmatrix} x+v_x \\ y+v_y \end{pmatrix}, \frac{1}{2}\right]$$

Finalement

$$P_1(x,y) = med3(F1(x,y); F2(x,y); F3(x,y))$$

Pour les trames 2 et 3, les filtres médians temporels de la luminance sont conservés, mais on supprime le filtre de repli. Dans le filtre de réduction de bruit temporelle, le filtre horizontal est supprimé, car il filtrerait trop bas les fréquences spatiales.

Mode film

Le cas du mode film est celui des séquences vidéo qui sont générées, non pas au format 625/50/2, mais en 625/25/1. Ces séquences sont donc dans un format progressif à l'entrée, ce qui veut dire que chaque image d'entrée contient 2 trames correspondant au même instant.

De là vient tout le problème: en effet si on applique à de telles séquences l'algorithme décrit ci-dessus, sans aucune modification, l'estimation de mouvement sera complètement inhibée, puisque le calcul des blocs principaux se fera entre les deux trames de la même image, et que toutes les estimations successives qui découlent de ceux-ci ne généreront que des vecteurs nuls. Si donc aucun mouvement n'est détecté, aucune interpolation temporelle ou compensation en mouvement ne pourra être faite. Ceci est très gênant, car à l'affichage de telles séquences, on ne pourra que répéter 3 fois à l'écran chaque image d'entrée. D'où un effet de saccade particulièrement désagréable dans toute séquence comportant du mouvement.

Une solution simple et peu coûteuse permettant de réduire considérablement cet effet de saccade est la suivante: on va modifier la phase du traitement des informations de façon à ce que le mouvement entre 2 images différentes soit détecté et estimé, et que donc une interpolation temporelle soit possible.

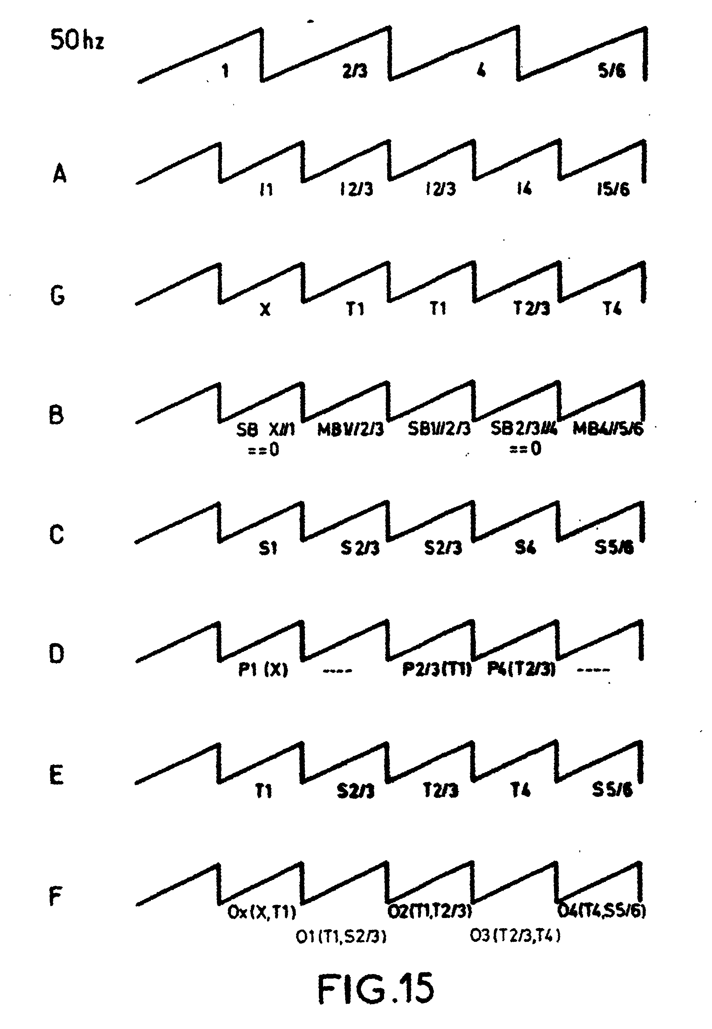

Par conséquent, l'estimation de mouvement principale (la phase des blocs principaux) devra se faire entre une trame 1 paire et une trame 2/3 impaire et non plus entre une trame 1 impaire et une trame 2/3 paire. Les chronogrammes donnés figure 15 illustrent ce mode de fonctionnement particulier.

Tout le traitement sera ainsi décalé d'une trame 50hz. Ce qui veut dire qu'en sortie les lignes à interpoler auront la parité opposée à celle qu'elles ont lors du traitement normal. Mais les filtres et l'estimateur de mouvement fonctionneront de façon strictement identique. Ainsi on générera successivement:

- une trame 1 progressive en utilisant le champ de vecteurs de blocs principaux, en conservant les lignes d'entrée et en interpolant les autres avec le filtre médian spatio-temporel à 7 points décrit précédemment,

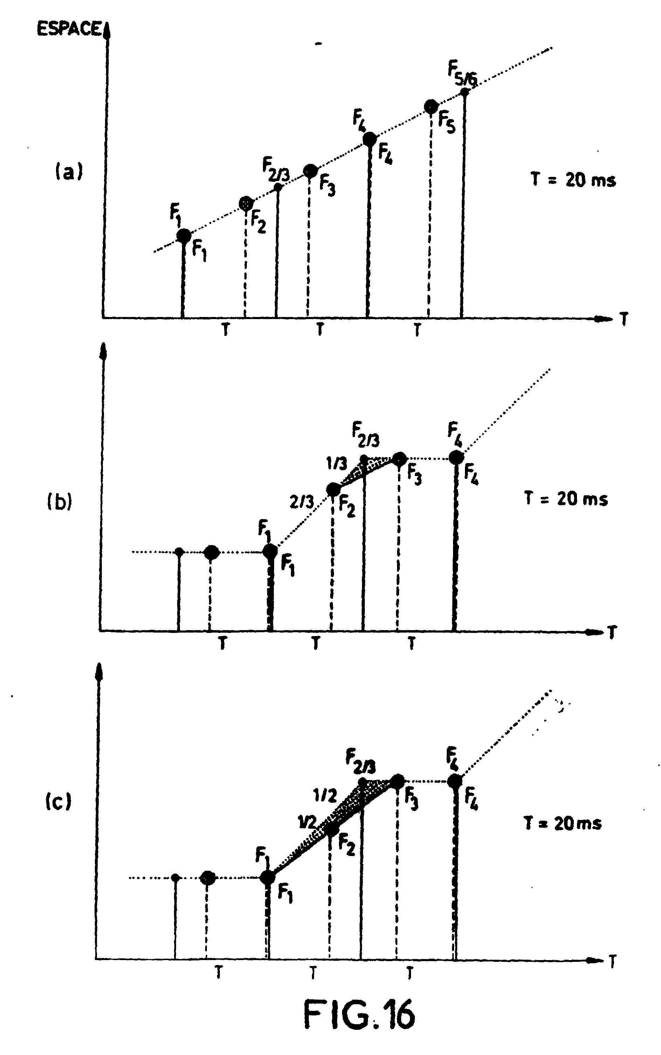

- une trame 2 progressive en utilisant le champ de vecteurs de sous-blocs estimé avec les trames 1 et 2/3 d'entrée. On utilisera ici aussi le filtre médian temporel à 3 points décrit précédemment. Par contre au lieu d'appliquer les coefficients de pondération 2/3 et 1/3 ordinaires, on utilisera les coefficients 1/2 et 1/2; ce qui veut dire que la trame 2 que l'on génère ainsi est située à égale distance entre les trames d'entrées 1 et 2/3. Cette simple modification des coefficients constitue à elle seule une importante réduction de saccade, bien appréciable et sensible sur toutes les images qui ont été traitées. Voir figure 16 le schéma explicatif de cette réduction de saccade.

- et enfin une trame 3 progressive utilisant normalement le champ de vecteur des sous-blocs corrigé par les blocs intermédiaires. En fait, ici, puisque les trames 2/3 et 4 sont issues de la même image, il n'y a pas de mouvement entre ces deux trames. Il suffit donc de forcer les vecteur à zéro ainsi que la confiance: de cette façon le filtre décrit précédemment entrelacera purement et simplement les 2 trames d'entrée pour régénérer une image progressive parfaite.

En conclusion, le mode film pourra être traité sans modification des filtres et mécanismes d'estimation de mouvement: il suffira de contrôler, lorsqu'on aura détecté la présence du mode film, la phase du traitement, les coefficients d'interpolation du filtre des trames 2 ainsi que les vecteurs et confiances des trames 3. La réduction de saccade ainsi obtenue sera donc peu coûteuse à implémenter.

## Revendications

1. Procédé de correction d'estimation de mouvement dans des images comportant des structures périodiques (trame 1 et trame 4-figure 4) dans un système de détermination de vecteurs de mouvement (5) par comparaison de blocs d'images, une matrice d'erreurs étant associée à chaque bloc, **caractérisé en ce qu'**il comporte les étapes:

   - de détermination des blocs périodiques adjacents,
   - de choix d'un vecteur de mouvement unique pour l'ensemble de ces blocs.

2. Procédé selon la revendication 1, **caractérisé en ce que**, une matrice d'erreur étant associée à chaque bloc, l'étape de choix d'un vecteur de mouvement comporte elle-même l'étape de cumul membre à membre des matrices d'erreur des blocs périodiques.

3. Procédé selon la revendication 2, **caractérisé en ce que** l'on considère l'ensemble de blocs périodiques adjacents d'une même ligne de blocs.

4. Procédé selon la revendication 3, **caractérisé en ce que** l'étape de choix d'un vecteur de mouvement comporte en outre l'étape de détermination d'un ensemble de vecteurs candidats, et de choix en tant que vecteur unique du vecteur candidat donnant le minimum d'erreur dans la matrice cumulée.

5. Procédé selon la revendication 3, **caractérisé en ce que** l'étape de choix d'un vecteur de mouvement comporte outre l'étape de choix comme vecteur unique d'un des deux vecteurs des blocs à gauche et à droite des blocs périodiques si l'erreur dans la matrice cumulée correspondant à l'un desdits deux vecteurs est un minimum local dans sa ligne.

**6.** Procédé selon les revendications 4 et 5, **caractérisé en ce que** si aucun desdits deux vecteurs ne remplit la condition de la revendication 5, alors le vecteur donnant le minimum d'erreur de la matrice cumulée est choisi en tant que vecteur unique.

**7.** Procédé selon l'une des revendications 3 à 6, **caractérisé en ce que** le vecteur unique finalement retenu est le vecteur d'un bloc immédiatement supérieur à l'un des blocs périodiques adjacents s'il est lui aussi périodique et si l'erreur associée à ce bloc dans la matrice cumulée est un minimum local dans sa ligne.

**8.** Procédé selon l'une des revendications précédentes **caractérisé en ce que** l'étape de détermination des blocs périodiques adjacents comporte les étapes de

- détermination d'une matrice d'erreurs pour différents vecteurs de mouvement pour un bloc courant,
- détermination de la ligne (Row) de la matrice comportant l'erreur minimale (Err_min) de la matrice,
- détermination du maximum d'erreur (Err_max) de ladite ligne, ainsi que l'étape de
- détermination du plus petit minimum secondaire (Err_sec_min) de ladite ligne, une condition de périodicité d'un bloc étant que lesdits deux minimas sont proches en valeur (C1),
- détermination du plus grand maximum secondaire (Err_sec_max) de ladite ligne,
- évaluation du niveau de bruit de l'image (Errminabs),
- mise en oeuvre de la condition supplémentaire (C2) pour déterminer la périodicité d'un bloc: la différence entre au moins un des minima (Err_min, Err_sec_min) et le maximum secondaire doit être significative par rapport au niveau de bruit de l'image.

**9.** Procédé selon la revendication 8, **caractérisé en ce qu'**une troisième condition (C3) doit être remplie : l'erreur maximale (Err_max) doit être significative par rapport au niveau de bruit de l'image (Errminabs).

**10.** Procédé selon la revendication 8 ou 9, **caractérisé en ce que** le niveau de bruit de l'image est égal au minimum, sur l'ensemble des blocs d'une image, des erreurs minimales pour chaque bloc et de la différence :

$$\text{Errrninabs} = \min_{j = 1,...,a} \{\text{Errminabs}(i,j), (\text{Errmax-Errmin})(i,j)\}$$

$$j = 1,...,a$$

où Errmin est l'erreur minimale déterminée pour le bloc (i,j), et où Errmax est l'erreur maximale déterminée pour le bloc (i,j), a et b le nombre de blocs horizontaux et verticaux de l'image.

**Claims**

**1.** Process for motion estimation correction in frames comprising periodic structures (field 1 and field 4-Figure 4) in a system for determining motion vectors (5) by comparing blocks of frames, an error matrix being associated with each block, **characterized in that** it comprises the steps:

- of determining the adjacent periodic blocks,
- of choosing a unique motion vector for this entire set of blocks.

**2.** Process according to Claim 1, **characterized in that**, an error matrix being associated with each block, the step of choosing a motion vector itself comprises the step of member-by-member aggregation of the error matrices of the periodic blocks.

**3.** Process according to Claim 2, **characterized in that** the set of adjacent periodic blocks of one and the same row of blocks is considered.

**4.** Process according to Claim 3, **characterized in that** the step of choosing a motion vector furthermore comprises the step of determining a set of candidate vectors, and of choosing as unique vector the candidate vector giving the minimum error in the aggregate matrix.

**5.** Process according to Claim 3, **characterized in that** the step of choosing a motion vector furthermore comprises the step of choosing as unique vector one of the two vectors of the blocks to the left and to the right of the periodic blocks if the error in the aggregate matrix corresponding to one of the said two vectors is a local minimum in its row.

6. Process according to Claims 4 and 5, **characterized in that** if neither of the said two vectors fulfils the condition of Claim 5, then the vector giving the minimum error of the aggregate matrix is chosen as unique vector.

7. Process according to one of Claims 3 to 6, **characterized in that** the unique vector finally adopted is the vector of a block immediately above one of the adjacent periodic blocks if it itself is also periodic and if the error associated with this block in the aggregate matrix is a local minimum in its row.

8. Process according to one of the preceding claims, **characterized in that** the step of determining the adjacent periodic blocks comprises the steps of

   - determining an error matrix for various motion vectors for a current block,
   - determining the row of the matrix comprising the minimum error (Err_min) of the matrix,
   - determining the maximum error (Err_max) of the said row, as well as the step of
   - determining the smallest secondary minimum (Err_sec_mm) of the said row, a block periodicity condition being that the said two minima are close in terms of value (C1),
   - determining the largest secondary maximum (Err_sec_max) of the said row,
   - evaluating the noise level of the frame (Errminabs),
   - implementing the additional condition (C2) for determining the periodicity of a block: the difference between at least one of the minima (Err_min, Err_sec_min) and the secondary maximum must be significant relative to the noise level of the frame.

9. Process according to Claim 8, **characterized in that** a third condition (C3) must be fulfilled: the maximum error (Err_max) must be significant relative to the noise level of the frame (Errminabs).

10. Process according to Claim 8 or 9, **characterized in that** the noise level of the frame is equal to the minimum, over the set of blocks of a frame, of the minimum errors for each block and of the difference:

$$\text{Errminabs} = \min{}_{i=1,...,a} \{\text{Errminabs}(i,j), (\text{Errmax}-\text{Errmin})(i,j)\}$$

$$j=1,...,a$$

where Errmin is the minimum error determined for block (i,j), and where Errmax is the maximum error determined for block (i,j), a and b the number of horizontal and vertical blocks of the frame.

**Patentansprüche**

1. Verfahren zur Korrektur der Bewegungsschätzung in Bildern mit periodischen Strukturen (Halbbild 1 und Halbbild 4-Figur 4) in einem System zur Bestimmung von Bewegungsvektoren (5) durch Vergleich von Bildblöcken, wobei eine Fehlermatrix jedem Block zugeordnet ist,
   **gekennzeichnet durch** folgende Schritte:

   - Bestimmung nebeneinanderliegender periodischer Blöcke,
   - Wahl eines einzigen Bewegungsvektors für alle diese Blöcke.

2. Verfahren nach Anspruch 1, **dadurch gekennzeichnet, daß**, dann, wenn eine Fehlermatrix jedem Block zugeordnet ist, der Schritt der Wahl eines Bewegungsvektors selbst den Schritt der Summierung dieser Fehlermatrices der periodischen Blöcke Glied für Glied enthält.

3. Verfahren nach Anspruch 2, **dadurch gekennzeichnet, daß** alle nebeneinanderliegenden periodischen Blöcke derselben Zeile von Blöcken berücksichtigt werden.

4. Verfahren nach Anspruch 3, **dadurch gekennzeichnet, daß** der Schritt der Wahl eines Bewegungsvektors außerdem den Schritt der Bestimmung eines Satzes von Hilfsvektoren und der Wahl eines einzigen Hilfsvektors enthält, der den minimalen Fehler in der summierten Matrix ergibt.

5. Verfahren nach Anspruch 3, **dadurch gekennzeichnet, daß** der Schritt der Wahl eines Bewegungsvektors außerdem den Schritt der Wahl eines einzigen Vektors der Blöcke von links nach rechts der periodischen Blöcke enthält, wenn der Fehler in der summierten Matrix, der einem der beiden Vektoren entspricht, ein örtliches Minimum in dieser Zeile ist.

6. Verfahren nach Anspruch 4 und 5, **dadurch gekennzeichnet, daß** dann, wenn keiner der beiden Vektoren die Bedingung des Anspruchs 5 erfüllt, der Vektor, der den minimalen Fehler der summierten Matrix ergibt als einziger Vektor gewählt wird.

7. Verfahren nach einem der Ansprüche 3 bis 6, **dadurch gekennzeichnet, daß** der einzige Vektor, der schließlich erhalten bleibt, der Vektor eines Blocks unmittelbar über einem der angrenzenden periodischen Blöcke ist, wenn er ebenfalls periodisch ist, und wenn der zu diesem Block gehörende Fehler in der summierten Matrix ein örtliches Minimum in seiner Zeile ist.

8. Verfahren nach einem der vorangehenden Ansprüche, **dadurch gekennzeichnet, daß** der Schritt der Bestimmung der nebeneinanderliegenden periodischen Blöcke folgende Schritte enthält:

   - Bestimmung einer Fehlermatrix für unterschiedliche Bewegungsvektoren für einen laufenden Block,
   - Bestimmung der Reihe (Row) der Matrix, die den minimalen Fehler (Err_min) der Matrix enthält,
   - Bestimmung des Maximalfehlers (Err_max) der Reihe sowie der Schritt der
   - Bestimmung des kleinsten sekundären Minimums (Err_sec_min) der Reihe, wobei eine Bedingung der Periodizität eines Blockes darin besteht, daß die beiden Minima in ihrem Wert (C1) nahe zueinander liegen,
   - Bestimmung des größten sekundären Maximums (Err_sec_max) der Reihe,
   - Auswertung des Rauschwertes des Bildes (Errminabs),
   - Durchführung der zusätzlichen Bedingung (C2) zur Bestimmung der Periodizität eines Blocks: der Unterschied zwischen wenigstens einem der Minima (Err_min, Err_sec_min) und dem sekundären Maximum sollte nennenswert gegenüber dem Rauschwert des Bildes sein.

9. Verfahren nach Anspruch 8, **dadurch gekennzeichnet, daß** eine dritte Bedingung (C3) erfüllt sein muß: der maximale Fehler (Err_max) muß gegenüber dem Rauschwert des Bildes (Errminabs) nennenswert sein.

10. Verfahren nach Anspruch 8 oder 9, **dadurch gekennzeichnet, daß** der Rauschwert des Bildes gleich dem Minimum über alle Blöcke eines Bildes ist, der Minimalfehler für jeden Block und der Differenz:

$$\text{Errminabs} = \min_{i=1,\dots,a} \{\text{Errminabs}(i,j), (\text{Errmax-Errmin})(i,j)\}$$

$$j=1,\dots,a$$

wobei Errmin der für den Block (i,j) ermittelte Minimalfehler Errmax, der für den Block (i,j) ermittelte Maximalfehler und b die Anzahl der horizontalen und vertikalen Blöcke des Bildes ist.

FIG.1

**FIG.2**

**50hz**

**I ENTRÉE** — 1 — 2/3 — 4 — 5/6

**A** — I1 — I2/3 — I2/3 — I4 — I5/6
SORTIE MÉMOIRE TRAME 1

**G** — X — T1 — T1 — T2/3 — T4
SORTIE MÉMOIRE TRAME 3

**B** — SB X//1 — MBV/2/3 — SBV/2/3 — SB 2/3//4 — MB4//5/6
VECTEURS MOUVEMENT

**C** — S1 — S2/3 — S2/3 — S4 — S5/6
SORTIE DU FILTRE SPATIAL

**D** — P1 (X) — ---- — P2/3(T1) — P4(T2/3) — ----
TRAME PROJETÉE

**E** — T1 — S2/3 — T2/3 — T4 — S5/6
SORTIE DU FILTRE TEMPOREL

**F** — Ox(X,T1) — O1(T1,S2/3) — O2(T1,T2/3) — O3(T2/3,T4) — O4(T4,S5/6)
SORTIE

# FIG.3

TRAME 1

TRAME 2/3

BLOC DONT LE MOUVEMENT EST À ESTIMER

BLOC CORRESPONDANT À UN MINIMUM D'ERREUR

VECTEURS MOUVEMENT POSSIBLES

FIG.4

EP 0 780 794 B1

FIG.5

EP 0 780 794 B1

# FIG.6

TRAME 1

TRAME 2/3

◯ PIXEL À GÉNÉRER

# FIG.7

FIG.8

TRAME 2/3

TRAME 2

TRAME 1

TRAME 1                    TRAME 2/3   TRAME 3

FIG.9

NL (x)

$-0.9 \times (x-1).(x-1)$

$0.75x$

0    Xm    0.5    1    x

(a)

(b)

TRAME
D'ENTRÉE

FONCTION
NON-LINÉAIRE

TRAME
DE
SORTIE

PROJECTION

RETARD-TRAME

FIG.10

V= (0,0)

V=(-1,-2)

FIG.11

FIG.12

FIG.13

TRAME 2/3  TRAME 3  TRAME 4

X

TRAME 2/3

TRAME 3

TRAME 4

△ PIXEL DE SORTIE À INTERPOLER

+ PIXEL MOYENNE VERTICALEMENT AVANT ESTIMATION MOUVEMENT DES TRAMES D'ENTRÉE

● PIXEL EN ENTRÉE

IDENTIFIE LES TROIS PIXEL UTILISÉS PAR LE FILTRE MÉDIAN

VECTEUR MOUVEMENT

VECTEUR MOUVEMENT CORRIGÉ ET ARRONDI

TRAME D'ENTRÉE

TRAME DE SORTIE

# FIG.14

EP 0 780 794 B1

FIG.15

FIG.16